# EUROPÄISCHE PATENTSCHRIFT

(11) **EP 3 148 658 B1**
(45) Veröffentlichungstag und Bekanntmachung des Hinweises auf die Patenterteilung: **19.06.2019**
(21) Anmeldenummer: 15729326.7
(22) Anmeldetag: 22.04.2015
(51) Int. Cl.: B62D 51/00, B62D 55/06, B62D 55/075, B62D 55/12, B62D 55/14, B62D 55/24, A63C 5/035, A63C 5/08

(54) **SPORTGERÄT MIT GLEITKÖRPER UND ANTRIEB FÜR EIN UMLAUFENDES BAND**
SPORTEQUIPEMENT WITH A GLIDING BODY AND AN ENGINE FOR A CONTINUOUS BELT
ENGIN DE SPORT AVEC CORPS DE GLISSE ET MOTORISATION POUR UNE BANDE CONTINUE

(30) Priorität: 23.04.2014 AT 502972014
(43) Veröffentlichungstag der Anmeldung: 05.04.2017
(73) Patentinhaber: ABP PATENT NETWORK GmbH, 4580 Windischgarsten (AT)
(72) Erfinder: BURGER, Hannes, 4580 Windischgarsten (AT)
(74) Vertreter: Burger, Hannes
(86) Internationale Anmeldenummer: PCT/AT2015/050097
(87) Internationale Veröffentlichungsnummer: WO 2015/161329

(56) Entgegenhaltungen:
- FR-A- 530 131
- FR-A1- 2 392 688
- US-A- 3 964 560
- US-A1- 2002 074 176

## Beschreibung

Die Erfindung betrifft ein Sportgerät, wie dies im Anspruch 1 angegeben ist.

Aus der US 2,625,229 A ist ein Sportgerät, insbesondere ein Aufstiegsski oder Tourenski bekannt, welches zur Unterstützung der Muskelkraft einen Antrieb in Form einer Brennkraftmaschine aufweist. Pro Ski sind dabei zwei Antriebsraupen in Form zweier jeweils umlaufender Steigfelle ausgebildet. Jedes der beiden Steigfelle ist zwischen zwei Umlenkrollen aufgespannt. Die beiden Antriebsraupen mit den beiden je Antriebsraupe vorgesehenen Umlenkrollen sind dabei insgesamt an der vom Gleitbelag des Sportgerätes abgewandten Oberseite am Sportgerät angebracht. Die beiden Antriebsraupen sind hierbei so am Sportgerät angebracht, dass eine Antriebsraupe in Fahrtrichtung gesehen vor der Skibindung und eine Antriebsraupe hinter der Skibindung angeordnet ist. Für den Aufstieg wird das Sportgerät so ausgerichtet, dass die Antriebsraupe am Untergrund, wie zum Beispiel Schnee, aufliegt. Für die Abfahrt wird das Sportgerät gewendet, sodass der Gleitbelag des Skis auf dem Untergrund aufliegt und sich die beiden Antriebsraupen an der Oberseite befinden. Um zwischen Aufstiegsmodus und Abfahrtsmodus wechseln zu können, ist vorgesehen, dass der Mittelabschnitt des Ski, welcher für die Aufnahme der Skibindung vorgesehen ist, 180° um die Skilängsachse verdrehbar ist, sodass bei Verwendung des Sportgerätes die Kopplung des Skischuhs mit der Skibindung jeweils an der vom Untergrund abgewandten Seite des Sportgerätes vorgenommen werden kann. Weiters ist vorgesehen, auch die Skispitze um 180° zu wenden, sodass die Skispitze stets nach oben gerichtet ist bzw. immer in eine vom Untergrund abgewandte Richtung zeigt. Als Antrieb ist ein Verbrennungsmotor vorgesehen, welcher sich am Rücken des Skifahrers befindet und die nötige Antriebsleistung liefert. Die Antriebsleistung des Verbrennungsmotors wird dabei über flexible Antriebswellen auf die hinter der Skibindung angebrachte Antriebsraupe übertragen. Weiters kann vorgesehen sein, dass zwischen hinterer und vorderer Antriebsraupe ein Wellentrieb oder eine Antriebskette ausgebildet ist, um die Antriebskraft von der hinteren Antriebsraupe auch auf die vordere Antriebsraupe übertragen zu können.

Das in der US 2,625,229 A beschriebene Sportgerät besitzt den Nachteil, dass dessen Aufbau sehr schwer ist. Besonders beim Hinunterfahren bzw. im Zuge von Downhill-Abfahrten, bei welchen die Gleitfunktion des Skis genutzt wird, ergibt sich der große Nachteil, dass ein gewünschtes positives Handling des Skis nicht erreicht werden kann. Somit ist die Nutzungs- bzw. Fahrfreude mit einem derartigen Ski sehr getrübt bzw. die erzielbare Performance nur bedingt zufriedenstellend.

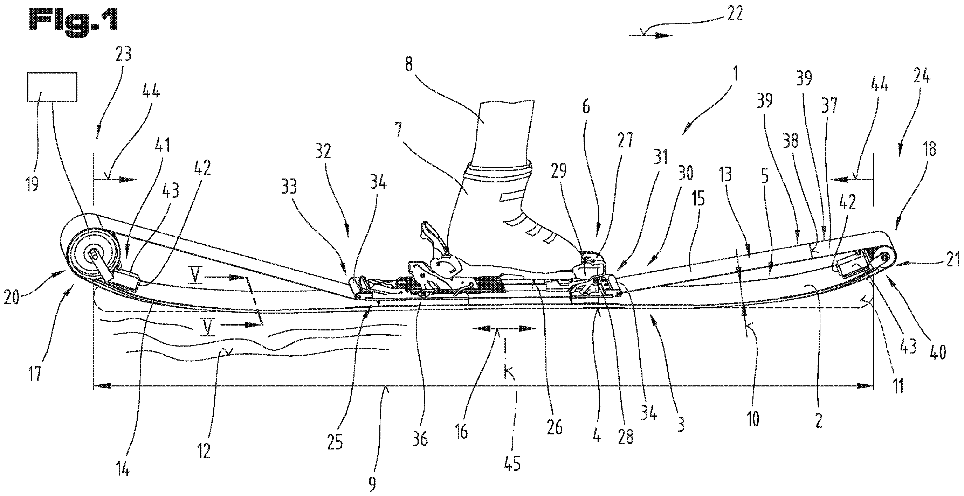

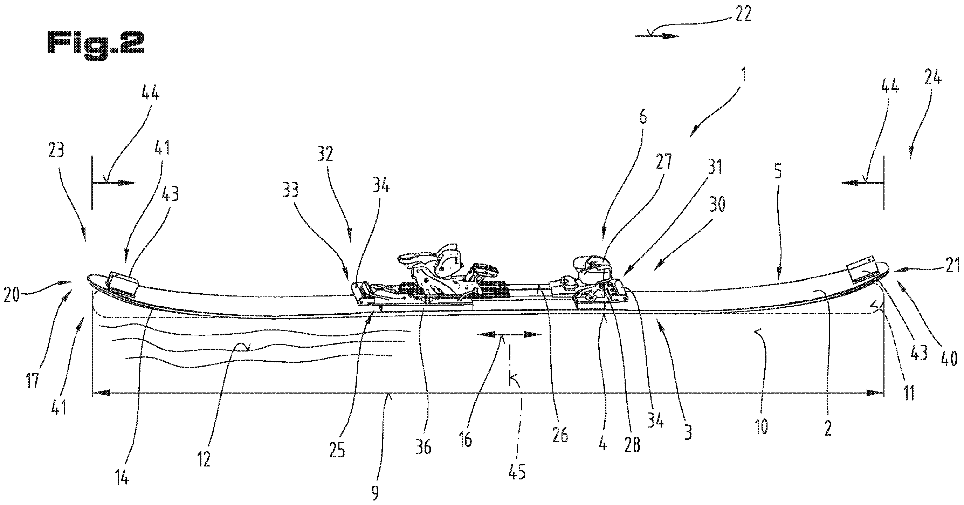

Aus der FR 530 131 A sind verschiedene Ausführungsvarianten eines Sportgerätes mit Antrieb offenbart. In einer ersten Gruppe von Ausführungsvarianten entsprechend der Figuren 1, 3 und 4 ist ein Ski vorgesehen, welcher eine Schnecke aufweist, die zum Übertragen der notwendigen Antriebskraft dient. In einer weiteren Ausführungsvariante entsprechend der Figur 2 ist vorgesehen, dass eine Basiskonstruktion ausgebildet ist, an welcher eine Antriebsrolle und mehrere Umlenk- bzw. Führungsrollen gelagert sind. An der Basiskonstruktion ist eine Bindungsvorrichtung angeordnet mittels welcher ein Sportler mit dem Sportgerät verbunden ist. Um die verschiedenen Rollen herum ist eine Antriebsraupe gespannt, welche zum Antrieb der Basiskonstruktion und somit zum Antrieb des Sportlers dient.

Aus der US 3,964,560 A ist ein Sportgerät bekannt, welches einen Gleitkörper umfasst, an welchem eine Unterseite als Gleitfläche ausgebildet ist und eine an der Oberseite des Gleitkörpers angeordnete Bindungsvorrichtung ausgebildet ist. Weiters ist eine Antriebsraupe vorgesehen, welche hinter dem Gleitkörper angeordnet ist und mittels einem Befestigungsmittel mit dem Gleitkörper verbunden ist. Die Antriebsraupe dient zum Antrieb des Sportgerätes.

Die US 2002/0074176 A1 offenbart ein Sportgerät, welches eine Basiskonstruktion aufweist, an welcher eine Antriebsrolle und mehrere Umlenk- bzw. Führungsrollen gelagert sind. An der Basiskonstruktion ist eine Bindungsvorrichtung angeordnet mittels welcher ein Sportler mit dem Sportgerät verbunden ist. Um die verschiedenen Rollen herum ist eine Antriebsraupe gespannt, welche zum Antrieb der Basiskonstruktion und somit zum Antrieb des Sportlers dient.

Der vorliegenden Erfindung liegt die Aufgabe zugrunde, ein verbessertes Sportgerät zu schaffen, welches möglichst leichtgewichtig ist und besonders im Abfahrtsmodus verbesserte Handlingeigenschaften aufweist.

Diese Aufgabe der Erfindung wird durch die Merkmale gemäß Anspruch 1 gelöst.

Erfindungsgemäß ist ein Sportgerät, insbesondere eine Tourenskianordnung ausgebildet, welches paarweise zu verwenden ist, wobei jedem Fuß des Benutzers ein Sportgerät bzw. eine Tourenskianordnung zugeordnet ist. Das Sportgerät umfasst einen Gleitkörper an welchem eine Unterseite als Gleitfläche ausgebildet ist, eine an der Oberseite des Gleitkörpers angeordnete Bindungsvorrichtung, insbesondere Tourenbindung, zur bedarfsweise lösbaren Befestigung mit einem Sportschuh eines Benutzers, sowie eine Antriebsvorrichtung und zumindest eine erste Umlenkvorrichtung für das Band. Das Band ist in einem ersten Abschnitt der Unterseite des Gleitkörpers nächstliegend zugeordnet und in einem zweiten Abschnitt der Oberseite des Gleitkörpers nächstliegend zugeordnet. Weiters ist zumindest der überwiegende Teil der Länge des Gleitkörpers vom umlaufenden, in sich geschlossenen Band umgrenzt. Das Band ist durch die Antriebsvorrichtung zumindest in einer Längsrichtung relativ zum Gleitkörper bewegbar.

Ein Vorteil der erfindungsgemäßen Ausbildung liegt darin, dass der Aufbau des Sportgerätes möglichst einfach gehalten ist. Dadurch weist das Sportgerät eine möglichst geringe Masse auf, wodurch einerseits das Tragen des Sportgerätes erleichtert wird und weiters die Handlingeigenschaften des Gleitkörpers im Abfahrtszustandes des Gleitkörpers verbessert werden. Durch den angegebenen Aufbau des Sportgerätes kann auch erreicht werden, dass das Band relativ einfach vom Sportgerät abgenommen werden kann, sodass das Sportgerät schnell und einfach vom Aufstiegszustand in den Abfahrtszustand - und umgekehrt - gebracht werden kann. Darüber hinaus kann durch den einfachen Aufbau des Sportgerätes eine möglichst geringe Anzahl von sich bewegenden Teilen erzielt werden, wodurch die Fehleranfälligkeit, bzw. die Anfälligkeit gegenüber Funktionsstörungen des Sportgerätes vermindert wird. Ein weiterer Vorteil der erfindungsgemäßen Ausbildung liegt darin, dass eine gute Kraftübertragung der von der Antriebsvorrichtung aufgebrachten Antriebskraft auf den Untergrund, wie etwa Schnee oder Eis, erfolgen kann. Ein weiterer Vorteil liegt darin, dass nahezu herkömmliche Gleitgeräte bzw. Skier eingesetzt werden können, welche sich in der Praxis bereits vielfach bewährt haben. Insbesondere sind keine baulich aufwendigen Sonderkonstruktionen für das Gleitgerät erforderlich, wodurch die Kosten für die Schaffung des Sportgerätes möglichst gering gehalten werden können. Zudem wird durch die angegebenen Maßnahmen die Aufstandshöhe des Benutzers gegenüber dem Untergrund relativ niedrig gehalten.

Weiters kann es zweckmäßig sein, dass die Antriebsvorrichtung einem ersten Längsende des Gleitkörpers zugeordnet ist und die Umlenkvorrichtung dem gegenüberliegenden, zweiten Längsende des Gleitkörpers zugeordnet ist, sodass der Gleitkörper hinsichtlich seiner Länge vom umlaufend geführten Band vollständig umschlossen ist. Von Vorteil ist hierbei, dass das Sportgerät besonders schnell und einfach vom Aufstiegszustand in den Abfahrtszustand - und umgekehrt -umgerüstet werden kann. Ein weiterer Vorteil dieser Maßnahmen liegt darin, dass ein in relativ hoher Stückzahl herstellbarer Gleitkörper, etwa ein standardmäßiger oder nahezu standardmäßiger Tourenski, für die Implementierung des Sportgerätes verwendet werden kann, ohne dass am Gleitkörper aufwändige Adaptierungen vorgenommen werden müssen. Durch das bevorzugt über die gesamte Länge des Gleitkörpers umlaufende Band kann weiters ein besonders guter und stabiler Halt des Bandes gegenüber dem Untergrund erreicht werden. Entsprechend einer zweckmäßigen Ausführung erstreckt sich dabei das Band außen um das vordere und hintere Skiende, insbesondere um die vordere und die hintere, nach oben gebogene Skischaufel des Skis.

Ferner kann vorgesehen sein, dass der zweite Abschnitt in einem Freiraum unterhalb einer Schuhaufstandsebene der Bindungsvorrichtung hindurchgeführt ist. Von Vorteil ist hierbei, dass somit das Band umlaufend bzw. ringförmig geschlossen ausgeführt werden kann und weiters einfach rückgeführt werden kann. Weiters kann dadurch vermieden werden, dass das Band, in Bandlängsrichtung gesehen, winkelig verdreht bzw. seitlich abgelenkt werden muss.

Darüber hinaus kann vorgesehen sein, dass der Freiraum zwischen einer Verbindungsvorrichtung zur gelenkigen Verbindung der Bindungseinrichtung mit dem Gleitkörper und der Oberseite des Gleitkörpers oder zwischen Verbindungselementen zur gelenkigen Verbindung des Sportschuhs mit der Bindungsvorrichtung und dem Gleitkörper ausgebildet ist. Eine Anordnung des Freiraumes in diesem Bereich ist von besonderem Vorteil, da der Freiraum gut in die Bindungsvorrichtung oder in eine unter der Bindungsvorrichtung eingebrachte Unterlagsplatte eingebracht werden kann, oder mittels einer podestartigen Haltekonstruktion für die Bindungseinrichtung einfach und stabil umgesetzt werden kann.

Vorteilhaft ist auch eine Ausprägung, gemäß welcher das Band als endloses, rückgleithemmendes Steighilfemittel, insbesondere als Steigfell, ausgebildet sein kann. Ein derartiges Band kann besonders gegenüber einem glatten bzw. rutschigen Untergrund, wie etwa Schnee oder Eis, eine gute Rückgleithemmung in Zusammenhang mit Gehschritten und Antriebsbewegungen gewährleisten, sodass ein sicheres Vorankommen bzw. ein relativ effizienter und müheloser Aufstieg erzielt werden kann. Darüber hinaus ist dadurch eine relativ leichtgewichtige Konstruktion erreichbar. Hinzu kommt, dass bei eventuell auftretenden, allmählichen Verschleiß- bzw. Ermüdungserscheinungen das Band einfach und relativ kostengünstig ersetzt werden kann.

Gemäß einer Weiterbildung ist es möglich, dass das Band mittels einer bedarfsweise aktivier- und deaktivierbaren Kupplungsvorrichtung ringförmig schließbar und auftrennbar ist. Von Vorteil ist hierbei, dass das ringförmig geschlossene Band durch die Möglichkeit des Auftrennens leicht in bzw. auf das Sportgerät eingefädelt bzw. aufgebracht werden kann, und somit der Freiraum zum Hindurchführen des Bandes unterhalb der Schuhaufstandsebene keine Möglichkeit bzw. Maßnahme aufweisen muss, um ein in sich geschlossenes Endlosband einbringen zu können. Weiters kann ein solches vom Sportgerät entferntes Band im geöffneten Zustand leicht eingerollt werden und kann somit in einem Rucksack einfach verstaut bzw. kompakt transportiert werden.

Alternativ dazu kann vorgesehen sein, dass das ringförmige Band untrennbar miteinander verbundene, insbesondere miteinander verschweißte, Bandenden aufweist. Bei dieser Ausführungsvariante ist vorteilhaft, dass ein derartiges Band mit einer hohen Stabilität bzw. Zugfestigkeit versehen werden kann. Weiters kann ein derartiges Band gut bzw. widerstandsfrei, insbesondere relativ gleichförmig und harmonisch, um eine Antriebsrolle gelenkt bzw. um eine Umlenkrolle geführt werden. Auch die Robustheit und die Aufbaukosten können durch diese technische Maßnahme optimiert werden.

Ferner kann es zweckmäßig sein, wenn die Antriebsvorrichtung an einem in Fortbewegungsrichtung gesehen hinteren Endabschnitt des Gleitkörpers angeordnet ist und die erste Umlenkvorrichtung am vorderen Endabschnitt des Gleitkörpers angeordnet ist. Von Vorteil ist hierbei, dass die Kraft, welche von der Antriebsvorrichtung auf das Band übertragen wird, auf möglichst direktem bzw. kürzest möglichem Weg in den Untergrund geleitet werden kann, und somit in eine Fortbewegung gewandelt werden kann. Hierdurch wird erreicht, dass der zweite, rücklaufende Abschnitt mit einer möglichst geringen Zugkraft, nämlich der Vorspannkraft belastet wird. Weiters ist dadurch die vergleichsweise schwerere Antriebsvorrichtung am rückwärtigen Ende des Gleitkörpers angebracht, wodurch die Handlingeigenschaften des Sportgerätes im Aufstiegszustand bzw. im Zuge der Schreitbewegungen während des Aufstiegs begünstigt werden.

Darüber hinaus kann vorgesehen sein, dass die Antriebsvorrichtung und/oder die erste Umlenkvorrichtung mittels zumindest einer Kupplungsvorrichtung am Gleitkörper bedarfsweise montier- und demontierbar gehaltert sind. Von Vorteil ist hierbei, dass dadurch besonders die Handlingeigenschaft des Gleitkörpers im Abfahrtszustand verbessert werden kann, da die zusätzlichen Massen der Antriebsvorrichtung und/oder der ersten Umlenkvorrichtung nicht auf den Gleitkörper wirken bzw. nicht mit dem Gleitkörper gekoppelt sind.

In einer Weiterbildung kann vorgesehen sein, dass die zumindest eine Kupplungsvorrichtung eine erstes Kupplungselement und ein damit korrespondierendes zweites Kupplungselement umfasst, wobei eine Koppelungsbewegung zwischen dem ersten und zweiten Kupplungselement im Wesentlichen in Längsrichtung des Gleitkörpers verläuft und in Richtung zur Längsmitte des Gleitkörpers ausgerichtet ist. Von Vorteil ist hierbei, dass durch ein derartiges Kupplungselement die Antriebsvorrichtung bzw. die Umlenkvorrichtung auf den Gleitkörper aufgesteckt werden können und durch die Vorspannung des Bandes in Position gehaltert werden. Somit ist kein eigenes Werkzeug notwendig, um die die Antriebsvorrichtung bzw. die Umlenkvorrichtung zu fixieren. Daher kann ein Umbau vom Aufstiegszustand in den Abfahrtszustand und umgekehrt möglichst schnell und einfach und ohne zusätzliches Werkzeug erfolgen.

Alternativ dazu kann vorgesehen sein, dass die Antriebsvorrichtung und/oder die Umlenkvorrichtung zwischen einer das Band aufspannenden Betriebsstellung im Zuge eines Aufstiegszustandes des Sportgerätes und einer das Band freigebenden Ruhestellung im Zuge eines Abfahrtszustandes des Gleitkörpers verstellbar, insbesondere verschwenkbar ist. Von Vorteil ist hierbei, dass die Antriebsvorrichtung bzw. die Umlenkvorrichtung im Abfahrtszustand des Gleitkörpers nicht in einem Rucksack verstaut werden müssen, sondern dass sie am Gleitkörpers verbleiben können und so positioniert werden können, dass sie möglichst wenig bei der Abfahrt stören.

Weiters kann vorgesehen sein, dass in Bezug auf die Längserstreckung des Gleitkörpers vor und hinter der Bindungsvorrichtung zumindest eine dritte und eine vierte Umlenkvorrichtung, insbesondere wenigstens eine Gleitführung oder Umlenkrolle, angeordnet sind, durch welche der zweite Abschnitt des Bandes geführt und/oder umgelenkt ist. Vorteilhaft ist hierbei, dass dadurch das Band, insbesondere der zweite Abschnitt, gut unter der Bindungsvorrichtung durchgeführt werden kann, ohne dass dieses Teile der Bindungsvorrichtung selbst berührt. Somit kann vermieden werden, dass das Band durch die Bindungsvorrichtung beschädigt wird. Zudem können dadurch die auftretenden Reibungsverluste möglichst gering gehalten werden, was die maximale Lebensdauer des Bandes und die erzielbare Nutzungsdauer der Energieversorgungsquelle begünstigt.

Gemäß einer besonderen Ausprägung ist es möglich, dass das Band an dessen Innenseite zumindest abschnittsweise Querstege oder sich zwischen dessen Innen- und Außenseite erstreckende Durchbrüche zur Bildung einer Verzahnung aufweist, welche Verzahnung mit einer korrespondierenden Verzahnung einer Antriebsrolle der Antriebsvorrichtung in kämmenden Eingriff steht. Von Vorteil ist hierbei, dass dadurch die von der Antriebsvorrichtung aufgebrachte Arbeit bzw. das bereitgestellte Drehmoment, gut auf das Band und somit auf den Untergrund übertragen werden kann, ohne dass die Antriebsvorrichtung relativ zum Band rutscht. Von besonderem Vorteil ist weiters, dass durch diese Maßnahme die Vorspannung des Bandes relativ gering gehalten werden kann, sodass ein Umbau des Sportgerätes vom Abfahrtszustand in den Aufstiegszustand, und auch umgekehrt, schnell und einfach bzw. mühelos erfolgen kann, nachdem hierdurch vom Benutzer keine besonders hohen Kräfte, wie z.B. Aufspannkräfte, aufgewendet werden müssen.

Entsprechend einer vorteilhaften Weiterbildung kann vorgesehen sein, dass das Band an dessen Innenseite wenigstens einen sich in Bandlängsrichtung zumindest abschnittsweise erstreckenden Steg aufweist, welcher in einer korrespondierenden Ausnehmung in der Gleitfläche des Gleitkörpers verläuft. Von Vorteil ist hierbei, dass ein derartiger Steg als seitliche Führung dienen kann. Somit kann erreicht werden, dass auch bei einer Quer zur Längsrichtung gerichteten Kraft, welche vom Untergrund auf das Band übertragen wird, das Band nicht seitlich vom Gleitkörper abrutscht. Darüber hinaus kann auch dadurch das Band eine hohe Zugfestigkeit bei einer relativ geringen Stärke bzw. Dicke aufweisen, sodass die Aufstandshöhe des Benutzers gegenüber dem Untergrund möglichst gering bleibt.

Weiters kann es vorteilhaft sein, wenn der wenigstens eine längsverlaufende Steg an der Innenseite des Bandes eine Vielzahl von zueinander beabstandeten Querrippen umfasst, welche eine Verzahnung zur kämmenden Verbindung mit einer Antriebsrolle der Antriebsvorrichtung ausbilden. Von Vorteil ist hierbei, dass die Verzahnung gleichzeitig als Steg ausgebildet sein kann. Somit kann der Fertigungsaufwand für das Band verringert werden und dieses möglichst leicht und einfach gebaut werden. Zudem kann dadurch ein relativ kleiner Umlenkradius für das Band erzielt werden, ohne dass erhöhte Widerstandskräfte bzw. innere Reibungskräfte auftreten, welche die erzielbare Lebensdauer bzw. den erforderlichen Energieaufwand ungünstig beeinflussen würden.

Weiters kann es zweckmäßig sein, dass sich eine Breite des Steges nur über einen Teilabschnitt der Breite des Bandes erstreckt und in Bezug auf den Querschnitt des Bandes zumindest die äußeren Abschnitte an der Innenseite des Bandes reibungsvermindernde Gleitoberflächen gegenüber der Gleitfläche des Gleitkörpers aufweisen. Von Vorteil ist hierbei, dass neben der Führung des Bandes, welche durch den zumindest einen, bevorzugt längsmittig ausgebildeten Steg erreicht wird, auch eine verbesserte Leichtgängigkeit des Bandes gegenüber der Gleitfläche des Gleitkörpers erreicht werden kann, nachdem dadurch die Reibungsverluste möglichst gering gehalten werden können. Zudem kann dadurch übermäßiger Verschleiß des Bandes bzw. der Gleitfläche vermieden werden und weiters die Haltbarkeit des Akkupacks verlängert bzw. die Energieeffizienz gesteigert werden.

Ferner kann vorgesehen sein, dass die Antriebsvorrichtung einen Elektromotor und gegebenenfalls ein Untersetzungsgetriebe umfasst. Von Vorteil ist hierbei, dass ein Elektromotor gegenüber einem Verbrennungsmotor sehr geräuscharm ist. Darüber hinaus kann ein Elektromotor möglichst klein und gewichtssparend gebaut werden. Zudem ist ein Elektromotor besonders wartungsarm bzw. wartungsfrei und hinsichtlich seines Antriebsverhaltens bzw. seiner Antriebsleistung gut steuer- bzw. regulierbar. Ein weiterer großer Vorteil eines Elektromotors liegt darin, dass dieser umweltschonend betrieben werden kann und keine brennbaren Flüssigkeiten oder sonstige, gefährliche Treibstoffe mitgeführt werden müssen.

Darüber hinaus kann vorgesehen sein, dass die Antriebsvorrichtung achsenlos ausgeführt ist, indem eine Antriebsrolle der Antriebsvorrichtung an wenigstens einem axialen Stirnende eine Drehlagerung aufweist, durch welche die Antriebsrolle mit einem am Gleitkörper festgelegten Lagerbock drehbeweglich verbunden ist. Von Vorteil ist hierbei, dass dadurch die Antriebsvorrichtung möglichst gewichtssparend und einfach aufgebaut sein kann. Hinzu kommt, dass eine derartige Ausführung besonders robust bzw. belastungsfähig ist und langfristig verschleißfrei ausgeführt werden kann.

Vorteilhaft ist auch eine Ausprägung, gemäß welcher die Antriebsrolle als dünnwandiger Hohlzylinder ausgebildet sein kann und einen Elektromotor sowie ein gegebenenfalls vorgesehenes Untersetzungsgetriebe innerhalb der hohlzylindrischen Antriebsrolle angeordnet sein können. Vorteilhaft ist hierbei, dass durch eine derartige Ausführung weiteres Gewicht eingespart werden kann. Weiters können der Elektromotor und das Getriebe platzsparend und vor Umgebungseinflüssen geschützt aufgenommen werden. Darüber hinaus wird dadurch eine hohe Robustheit bzw. Unempfindlichkeit erzielt, nachdem der Elektromotor und das gegebenenfalls implementierte Getriebe innerhalb der hohlzylindrischen Antriebsrolle platziert sind und dadurch gut vor Umgebungseinflüssen, wie z.B. Stoßbelastungen, Schlägen, Staub, Feuchtigkeit oder sonstigen Witterungseinflüssen, geschützt werden können. Zudem kann dadurch ein besonders kompakter Aufbau erzielt werden.

Gemäß einer Weiterbildung ist es möglich, dass die Antriebsrolle an dessen hohlzylindrischer Innenwand einen Zahnkranz aufweist, durch welchen die Antriebsrolle mittels des Elektromotors oder des zwischengeschalteten Untersetzungsgetriebes antreibbar ist. Von Vorteil ist hierbei, dass durch diese Maßnahmen eine gewisse Drehzahluntersetzung erreicht wird. Somit kann ein möglicherweise nötiges Untersetzungsgetriebe kleiner ausfallen, oder zur Gänze vermieden werden. Auch die Kompaktheit und Funktionszuverlässigkeit bzw. die technische Standfestigkeit kann dadurch begünstigt werden.

Ferner kann es zweckmäßig sein, wenn die Antriebsvorrichtung einen Radnabenmotor umfasst, dessen Rotor die Antriebsrolle definiert oder aufnimmt. Von Vorteil ist hierbei, dass ein derartiger Radnabenmotor ein bewährtes bzw. optimiertes Serienprodukt sein kann, welches besonders kostengünstig produziert bzw. bereitgestellt werden kann und weiters gut in die Antriebsrolle integrierbar ist.

Darüber hinaus kann vorgesehen sein, dass eine Energieversorgungsquelle in Form eines elektrochemischen Akkupacks, insbesondere eines Bleigel-, Nickel-Cadmium- (NiCd), Nickel-Metallhydrid- (NiMH) oder Lithium-Ionen- (Li-Ion) Akkus vorgesehen ist, durch welche die Antriebsvorrichtung mit elektrischer Energie versorgbar ist. Derartige Akkupacks sind beispielsweise bei Elektrofahrrädern im Einsatz und können optimal für den Einsatzzweck in Verbindung mit dem erfindungsgemäßen Sportgerät verwendet werden. Insbesondere können derartige Energieversorgungsquellen ein optimiertes Gewichts- zu Leistungs-Verhältnis bieten, eine kostengünstige Verfügbarkeit gewährleisten und eine unkritische bzw. einfache Handhabung garantieren.

Weiters kann vorgesehen sein, dass eine elektrotechnische Steuereinheit mit der Antriebsvorrichtung verbunden und zur Steuerung der Antriebsvorrichtung ausgebildet ist, welche Steuereinheit eine digitale Eingabevorrichtung oder ein Potentiometer umfasst, durch welche eine Drehzahl und damit einhergehend eine Bewegungsgeschwindigkeit und/oder eine Einschaltdauer bzw. Schaltzeitpunkte der Antriebsvorrichtung vorgebbar oder variabel einstellbar ist. Von Vorteil ist hierbei, dass eine derartige elektrotechnische Steuereinheit die ablaufspezifische Ansteuerung für den Elektromotor besonders anpassungsfähig und zuverlässig übernehmen kann. Weiters ist es von Vorteil, wenn die Drehzahl des Elektromotors und die Schaltdauer bzw. die Schaltzeitpunkte variabel eingestellt werden können. Dadurch kann eine Verfahr- bzw. Fortbewegungsgeschwindigkeit, eine Schrittfrequenz, eine elektromotorische Unterstützungsleistung an die Bedürfnisse des jeweiligen Benutzers angepasst und abgestimmt werden. Ein Vorteil in der Einstellbarkeit der Schaltdauer liegt darin, dass dadurch der Verfahrweg des Sportgerätes an die Schrittlänge des Benutzers angepasst werden kann. Somit kann das Sportgerät zur Verwendung durch verschiedene Benutzer vorgesehen sein.

Gemäß einer besonderen Ausprägung ist es möglich, dass die Steuereinheit mit wenigstens einem Erfassungsmittel, beispielsweise einem Schaltkontakt oder einem elektrotechnischen Sensor, zur Erfassung eines Aktivierungsbefehls für die Antriebsvorrichtung verbunden ist. Von Vorteil ist hierbei, dass der Aktivierungsbefehl für die Antriebsvorrichtung von Seiten des Benutzers vorgegeben bzw. zumindest beeinflusst oder mitbestimmt werden kann. Insbesondere ist dadurch eine benutzerbewusste Aktivierung bzw. Deaktivierung und/oder Beeinflussung der Unterstützungsleistung der Antriebsvorrichtung gewährleistet. Das Verhalten des Sportgerätes kann somit spontan bzw. gut und an die individuellen Bedürfnisse des Benutzers bzw. an die wechselnden Gegebenheiten und Umfeldbedingungen angepasst werden.

Ferner kann vorgesehen sein, dass das wenigstens eine Erfassungsmittel zur Erfassung eines von einem Bediener aktiv oder bewusst initiierten Steuerbefehls und/oder zur Erfassung eines durch den physiologischen Bewegungsablauf bedingten Bewegungszustandes, beispielsweise einer vorbestimmten Drehwinkelstellung oder Druckbelastung, ausgebildet ist, und dass die Antriebsvorrichtung in Abhängigkeit von den Erfassungszuständen des wenigstens einen Erfassungsmittels angesteuert ist. Von Vorteil ist hierbei, dass die Steuerung auf bewusst bzw. manuell gesetzte Befehle reagiert und/oder auf unbewusst bzw. automatisiert gesetzte, insbesondere an den physiologischen Geh- bzw. Bewegungsablauf gekoppelte, Befehle des Benutzers reagiert, und das Sportgerät somit optimal betrieben bzw. optimiert benutzt werden kann.

Weiters kann es zweckmäßig sein, dass das Erfassungsmittel als Beschleunigungssensor ausgebildet ist, wobei eine Bewegung des Benutzers durch den Beschleunigungssensor erfasst wird und die Antriebsvorrichtung auf Basis der Erfassungszustände angesteuert wird. Von Vorteil ist hierbei, dass ein Beschleunigungssensor klein gebaut werden kann. Weiters kann ein Beschleunigungssensor den aktuellen Bewegungszustand des Benutzers gut erfassen, um daraus einen Steuerbefehl für die Aktivierung der Antriebsvorrichtung zu generieren.

Schließlich kann vorgesehen sein, dass die Bindungsvorrichtung einen Bindungsantrieb umfasst, durch welchen die Bindungsvorrichtung aktiv in eine Drehwinkelstellung verschwenkbar bzw. verdrehbar ist. Von Vorteil ist hierbei, dass dadurch der Benutzer in seiner Gehbewegung zusätzlich unterstützt werden kann, wobei durch den Bindungsantrieb der Benutzer bzw. zumindest dessen Fersenabschnitt vom Sportgerät aktiv abgehoben werden kann, und somit die potentielle Energie des Benutzers erhöht werden kann. Zweckmäßig ist es dabei, wenn dieser Bindungsantrieb einen Schwenkantrieb für die Bindungsvorrichtung bzw. für das zehenseitige Schuhhalteaggregat, insbesondere für den vorderen Haltekörper des Sportschuhs umfasst.

Die Schrittlänge ist jenes Maß um welches der Benutzer während der normalen Gehbewegung einen Fuß vor den anderen setzt. Die Schrittlänge ist stark abhängig von der Beinlänge des Benutzers. Darüber hinaus kann die Schrittlänge auch bei einem Benutzer variieren und beispielsweise von der Beschaffenheit des Untergrundes, der aktuellen körperlichen Verfassung des Benutzers, usw. abhängig sein.

Zum besseren Verständnis der Erfindung wird diese anhand der nachfolgenden, in den Figuren dargestellten Ausführungsbeispiele näher erläutert.

Es zeigen jeweils in stark vereinfachter, schematischer Darstellung:
- Fig. 1: eine perspektivische Ansicht eines Sportgerätes mit einem umlaufenden Band in dessen Aufstiegszustand, während nicht verschwenkter Ruhestellung des Sportschuhs;
- Fig. 2: eine perspektivische Ansicht des Sportgerätes im Abfahrtszustand ohne dem umlaufenden Band, im Zustand ohne einem angekoppelten Sportschuh;
- Fig. 3: eine perspektivische Ansicht einer Ausführungsform einer Antriebsvorrichtung des Sportgerätes;
- Fig. 4: eine Seitenansicht eines Sportgerätes mit ein- und ausschwenkbarer Antriebsvorrichtung und Umlenkvorrichtung im Abfahrtszustand bzw. ohne dem Bandelement für die Kraftunterstützung während eines Aufstieges bzw. einer Fortbewegung;
- Fig. 5: eine perspektivische Ansicht eines Schnittes gemäß der Schnittlinie V-V in Fig. 1;
- Fig. 6: eine perspektivische Ansicht einer weiteren Ausführungsvariante einer Antriebsvorrichtung für das Sportgerät;
- Fig. 7: eine Schnittdarstellung durch die Antriebsvorrichtung gemäß Fig. 6, insbesondere gemäß der Schnittlinie VII-VII in Fig. 6;
- Fig. 8: eine perspektivische Ansicht einer Ausführungsvariante des Sportgerätes mit einer Tragkonstruktion für die Bindungsvorrichtung;
- Fig. 9: eine perspektivische Ansicht einer weiteren Ausführungsvariante einer Tragkonstruktion mitsamt Bindungsvorrichtung;
- Fig. 10: eine perspektivische Ansicht eines Benutzers mit an seinen Füßen bzw. Sportschuhen angeschnallten Sportgeräten im Aufstiegszustand;
- Fig. 11: eine Seitenansicht des Sportgerätes im Aufstiegszustand bzw. Uphill-Modus während skiparalleler Lage der schwenkbeweglichen Bindungsvorrichtung;
- Fig. 12: eine Seitenansicht des Sportgerätes im Aufstiegszustand bzw. Uphill-Modus während hochgeschwenkter Stellung der Bindungsvorrichtung;
- Fig. 13: eine Seitenansicht einer weiteren Ausführungsvariante eines Sportgerätes im Aufstiegszustand mit einer skiparallel ausgerichteten bzw. inaktiven Bindungsvorrichtung für einen Sportschuh;
- Fig. 14: eine Seitenansicht des Sportgerätes im Aufstiegszustand bzw. Uphill-Modus während hochgeschwenkter Stellung der Bindungsvorrichtung mit der Bindungsvorrichtung zugeordnetem Schwenkantrieb für die Bindungsvorrichtung;
- Fig. 15: eine perspektivische Ansicht der Antriebsvorrichtung mit einem aktiv antreibbaren Band mit Durchbrüchen, in welche eine Verzahnung der Antriebsvorrichtung eingreift;
- Fig. 16: eine Schnittdarstellung des Bandes mit Durchbrüchen gemäß der Schnittlinie XV-XV in Fig. 15.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Fig. 1 zeigt eine perspektivische Ansicht eines Sportgerätes 1, insbesondere einer Tourenschianordnung, im Aufstiegszustand bzw. im Fortbewegungsmodus zur Bewältigung von Wegstrecken oder Geländeanstiegen bzw. Bergstrecken. In Fig. 2 ist das Sportgerät 1 im Abfahrtszustand bzw. Abfahrtsmodus dargestellt, in welchem dessen Gleitfunktion genutzt wird.

Das Sportgerät 1 umfasst einen Gleitkörper 2 an welchem eine Unterseite 3 als Gleitfläche 4 ausgebildet ist. Insbesondere kann die Unterseite 3 des Gleitkörpers 2 einen gegenüber Schnee oder Eis möglichst reibungsarmen und zugleich verschleißfesten Laufflächenbelag, beispielsweise aus Polyethylen, umfassen bzw. durch diesen gebildet sein. An einer Oberseite 5 des Gleitkörpers 2 ist eine Bindungsvorrichtung 6 angeordnet, welche zur Aufnahme eines Sportschuhs 7 eines Benutzers 8 dient. Die Bindungsvorrichtung 6 ist dabei als Kupplungsvorrichtung zu verstehen, welche zumindest eine bedarfsweise aktivier- und deaktivierbare Verbindung zwischen einem Sportschuh und dem Sportgerät 1 ermöglicht.

Die Gleitfläche 4 erstreckt sich vorzugsweise über die komplette Länge 9 des Gleitkörpers 2 und über die komplette Breite 10 des Gleitkörpers 2 und entspricht somit in ihren Abmessungen in etwa der Außenkontur des Gleitkörpers 2. Insbesondere wird dadurch der größte Teil 4 bedeckt bzw. gebildet. Eine Ausnahme können hierbei vor allem sogenannte Stahl- bzw. Steuerkanten sein, welche an den beiden Längsseitenrändern an der Unterseite 3 des Gleitkörpers 2 angebracht sein können. Mit anderen Worten ausgedrückt entspricht die Gleitfläche 4 im Wesentlichen der in Richtung zu einer Oberseite 5 des Gleitkörpers 2 projizierten Fläche 11.

Die Gleitfläche 4 ist jene Fläche, die im in Fig. 2 dargestellten Abfahrtszustand des Gleitkörpers 2 am Untergrund 12, wie etwa Schnee oder Eis, aufliegt. Ein vorderer Schaufelabschnitt und ein allenfalls ausgebildeter hinterer Schaufelabschnitt des Gleitkörpers 2 bilden an der dem Untergrund zugewandten Unterseite bevorzugt ebenso die gleitreibungsvermindernde Gleitfläche 4 aus.

Weiters umfasst das in Fig. 1 dargestellte Sportgerät 1 ein umlaufendes Band 13. Das umlaufende, in sich geschlossene Band 13 dient dazu, um im in Fig. 1 dargestellten Aufstiegszustand des Sportgerätes 1 eine Relativverschiebung des Sportgerätes 1, insbesondere des Gleitkörpers 2, gegenüber dem Untergrund 12 zu ermöglichen und somit den Benutzer 8 in seiner Gehbewegung bzw. in seiner Fortbewegung zu unterstützen.

Das umlaufende, ringförmig geschlossene Band 13 weist einen ersten Abschnitt 14 bzw. ein unteres Bandtrum auf, welches der Unterseite 3 des Gleitkörpers 2 nächstliegend zugeordnet ist, insbesondere unmittelbar an der Unterseite 3 bzw. Gleitfläche 4 des Gleitkörpers 2 an- bzw. aufliegt. Um ein Endlosband zu definieren, weist das Band 13 auch einen zweiten, rücklaufenden Abschnitt 15 bzw. ein oberes Bandtrum auf, welches der Oberseite 5 des Gleitkörpers 2 nächstliegend zugeordnet ist. Insbesondere ist dabei ein Endloslauf des Bandes 13 ermöglicht. Durch diese Ausgestaltung kann das Band 13 umlaufend ausgeführt werden und rings um den Gleitkörper 2 verlaufen bzw. um dessen Längsenden geführt werden.

Mit anderen Worten ausgedrückt ist es zweckmäßig, wenn - auf die Längsrichtung 16 des Gleitkörpers 2 bezogen - der Gleitkörper 2 über zumindest annähernd seiner Länge 9 oder auf seiner kompletten Länge 9 vom umlaufend geführten, ringförmig geschlossenen Band 13 umgrenzt bzw. umschlossen ist.

Um das umlaufende Band 13 am Gleitkörper 2 führen bzw. halten zu können, ist wenigstens eine Antriebsvorrichtung 17 und zumindest eine erste Umlenkvorrichtung 18 vorgesehen, zwischen welchen das Band 13 aufgespannt werden kann.

Der erste Abschnitt 14 ist im dargestellten Ausführungsbeispiel so angeordnet, dass er an der Gleitfläche 4 des Gleitkörpers 2 anliegt bzw. entlanggleitet, wobei das Band zumindest in den Gleitkörper-Teilabschnitten vor und hinter der Bindungsvorrichtung 6 an dessen Unterseite 3 bzw. an dessen Gleitflächen 4 unmittelbar anliegt. Der zweite Abschnitt 15 ist der Oberseite 5 des Gleitkörpers 2 naheliegend angeordnet.

Wie in Fig. 1 gut ersichtlich, ist das Sportgerät 1 ähnlich einer Antriebsraupe aufgebaut, um im in Fig. 1 dargestellten Aufstiegszustand den Benutzer 8 in seiner Gehbewegung zu unterstützen und ihm den Aufstieg auf einen Berg oder die Zurücklegung von Wegstrecken zu erleichtern.

Die Antriebsvorrichtung 17 wird hierzu von einer externen Energieversorgungsquelle 19 mit der benötigten Fremdenergie versorgt, um das Sportgerät 1 samt dem darauf stehenden Benutzer 8 in Bewegung zu versetzen bzw. um ihn in seinen physiologischen Bewegungs- bzw. Gehabläufen zu unterstützen. Die Energie der Energieversorgungsquelle 19 wird insbesondere dazu genutzt, die Fortbewegungen des Benutzers zu erleichtern, d.h. mit geringerer Kraftanstrengung zu ermöglichen und/oder solche Fortbewegungen zu beschleunigen bzw. ausdauernder ausführen zu können.

In einer bevorzugten Ausführungsform ist die Antriebsvorrichtung 17 einem ersten Längsende 20 des Gleitkörpers 2 zugeordnet und ist sie dort am Gleitkörper 2 befestigt bzw. gehaltert. Die erste Umlenkvorrichtung 18 ist an einem dem ersten Längsende 20 gegenüber liegenden, zweiten Längsende 21 des Gleitkörpers 2 angeordnet.

Entsprechend einem vorteilhaften Ausführungsbeispiel, wie es in Fig. 1 dargestellt ist, ist das erste Längsende 20 und somit die Antriebsvorrichtung 17 in Bezug auf die übliche Fortbewegungsrichtung 22 des Sportgerätes 1 an einem hinteren Endabschnitt 23 des Sportgerätes 1 angeordnet. Demzufolge ist das zweite Längsende 21 und somit die erste Umlenkvorrichtung 18 an einem vorderen Endabschnitt 24 des Sportgerätes 1 angeordnet.

Alternativ zur oben beschriebenen Ausführungsform ist es auch möglich, dass die Antriebsvorrichtung 17 am vorderen Endabschnitt 24 des Sportgerätes 1 angeordnet ist und dass die erste Umlenkvorrichtung 18 im hinteren Endabschnitt 23 des Sportgerätes 1 positioniert ist.

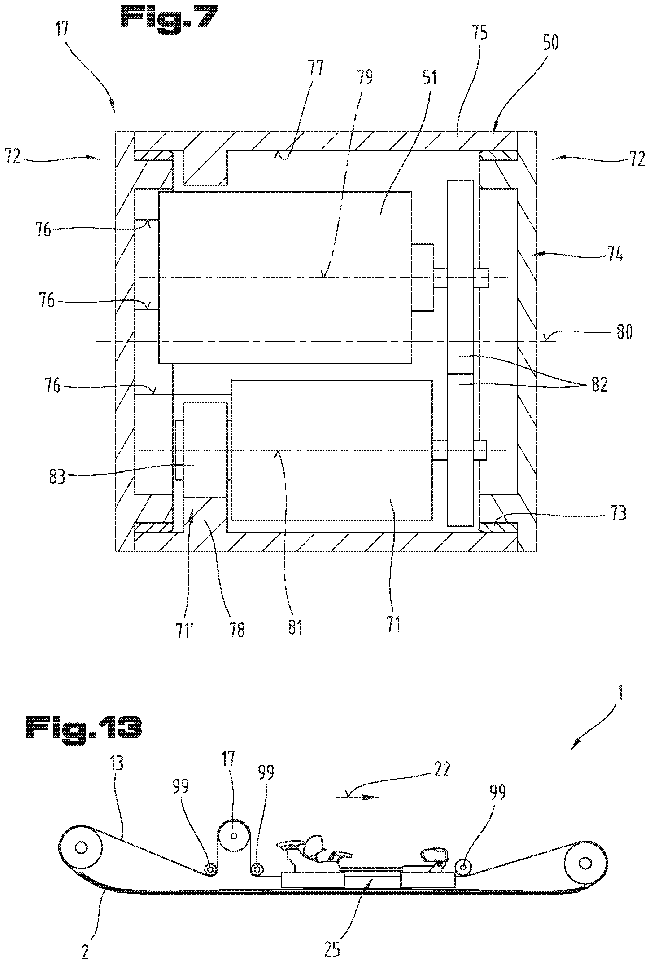

In einer weiteren Ausführungsvariante ist es auch denkbar, dass am vorderen Endabschnitt 24 und am hinteren Endabschnitt 23 eine erste Umlenkvorrichtung 18 und eine weitere Umlenkvorrichtung angeordnet sind und dass die Antriebsvorrichtung 17 an anderer Stelle des Bandes 13, insbesondere des zweiten Abschnittes 15, angeordnet ist. Ein mögliches Ausführungsbeispiel hierzu wird in Fig. 13 gezeigt. Dabei ist die Antriebsvorrichtung 17 in einem Abschnitt zwischen dem dem hinteren und vorderen Längsende 20, 21 des Gleitkörpers 2 positioniert.

Um eine vorteilhafte Führung des Bandes 13, insbesondere des oberen bzw. zweiten Abschnittes 15 am Sportgerät 1 zu ermöglichen, kann vorgesehen sein, dass der zweite Abschnitt 15 in einem Freiraum 25 unterhalb einer Schuhaufstandsebene 26 der Bindungsvorrichtung 6 hindurchgeführt ist. Dadurch kann erreicht werden, dass der zweite Abschnitt 15 vorteilhaft an der Oberseite des Sportgerätes 1 geführt wird, ohne dass der Benutzer 8 in seiner Bewegungsfreiheit von dem zweiten Abschnitt 15 eingeschränkt ist.

Entsprechend einer zweckmäßigen Ausführung kann der obere bzw. zweite Abschnitt in einer Distanz oberhalb des Gleitkörpers 2 geführt sein. Insbesondere kann vorgesehen sein, dass der obere bzw. zweite Abschnitt 15 zumindest über den Großteil seiner Länge die Oberseite 5 des Gleitkörpers 2 nicht kontaktiert, wodurch Reibungskräfte minimiert werden können. Entsprechend der dargestellten Ausführungsform kann der obere bzw. zweite Abschnitt 15 in den Teilabschnitten vor und/oder hinter der Bindungsvorrichtung 6 frei verlaufend sein, insbesondere bis zur Antriebsvorrichtung 17 und/oder bis zur Umlenkvorrichtung 18 freilaufend aufgespannt sein.

Eine beim gattungsgemäßen Sportgerät 1 eingesetzte Bindungsvorrichtung 6 ist vorzugsweise als Tourenbindung ausgeführt, durch welche eine Gehbewegung ermöglicht wird, insbesondere eine Relativverdrehung des Sportschuhs 7 gegenüber dem Gleitkörper 2 während eines Gehschrittes ausführbar ist. Insbesondere definiert die Bindungsvorrichtung 6 eine Schwenkachse, welche quer zur Längsrichtung des Gleitkörpers 2 bzw. des Sportgerätes 1 verläuft und so eine schwenkbewegliche Relativverstellung zwischen einem Sportschuh 7 des Benutzers und dem Gleitkörper 2 bzw. dem Sportgerät 1 ermöglicht.

Bei derartigen Tourenbindungen gibt es verschiedene Ausführungsformen. Zum einen ist eine Ausführungsform bekannt, in welcher ein Schuhaufnahmeelement 27 ausgebildet ist, welches mittels einer Verbindungsvorrichtung 28 mit einem am Gleitkörper 2 befestigten Teil der Bindungsvorrichtung 6 drehgelenkig verbunden ist.

Eine weitere Ausführungsvariante einer Tourenbindung ist derart aufgebaut, dass ein Verbindungselement 29 in Form zweier Zapfen direkt in den Sportschuh 7 eingreift bzw. die Sohle des Sportschuhs 7 in dessen Zehenabschnitt gelenkig haltert, sodass eine schwenkbewegliche Verbindung zwischen dem Sportschuh 7 und dem Verbindungselement 29 aufgebaut ist.

Unabhängig von der jeweiligen Ausführungsvariante der Bindungsvorrichtung 6 ist es vorteilhaft, wenn der zweite Abschnitt 15 zwischen dem Gleitkörper 2 und der Schwenk- bzw. Drehachse, welche sich aus der Verbindungsvorrichtung 28 oder dem Verbindungselement 29 ergibt, hindurchgeführt wird. Demnach ist das Band 13 bzw. dessen oberer Abschnitt 15 bevorzugt unterhalb der Schwenk- bzw. Drehachse der Bindungsvorrichtung 6 geführt bzw. positioniert.

Um den zweiten Abschnitt 15 gut durch den Freiraum 25 hindurchführen zu können, welcher Freiraum 25 sich unterhalb der Schuhaufstandsebene 26 befindet und im Wesentlichen durch einen schmalen Kanal gebildet ist, dessen Querschnittsabmessungen zumindest geringfügig größer bemessen sind als die Querschnittsabmessungen des Bandes 13, kann vorgesehen sein, dass vor der Bindungsvorrichtung 30 bzw. vor der Bindungsmontagzone eine dritte Umlenkvorrichtung 31 angeordnet ist und hinter der Bindungsvorrichtung 32 bzw. hinter der Bindungsmontagezone eine vierte Umlenkvorrichtung 33 angeordnet ist. Die Angaben vor und hinter der Bindungsvorrichtung 6 sind hierbei auf die übliche Fortbewegungsrichtung 22 des Sportgerätes 1 bezogen. Die dritte Umlenkvorrichtung 31 und die vierte Umlenkvorrichtung 33 können dabei beispielsweise als Umlenkrollen 34 ausgebildet sein. Zusätzlich oder alternativ dazu ist es denkbar, dass die dritte Umlenkvorrichtung 31 und/oder die vierte Umlenkvorrichtung 33 eine Gleitführung 35 umfasst, durch welche das Band 13 geführt wird. Ziel ist es dabei, dass das Band 13 möglichst frei bzw. reibungsarm, insbesondere auch schonend durch den Freiraum 25 unterhalb der Schuhaufstandsebene 26 verläuft.

Der Freiraum 25 kann entweder direkt in die Bindungsvorrichtung 6 oder in eine unterhalb einer montierten Bindungsvorrichtung 6 eingebrachte Tragkonstruktion 36 integriert sein. Ausgestaltungsmöglichkeiten der Bindungsvorrichtung 6 bzw. der Tragkonstruktion 36 werden in weiterer Folge noch genauer erklärt und beschrieben.

Das Band 13 ist vorzugsweise als endloses, rückgleithemmendes Steighilfemittel 37 ausgebildet, welches beispielsweise als Steigfell konzeptioniert sein kann. Ein solches Steigfell weist - wie an sich bekannt - eine Vielzahl von einheitlich ausgerichteten und typischerweise geneigt zu einem Trägermaterial verlaufende Härchen bzw. Fasern auf, um die rückgleithemmende Wirkung zu erzielen. Demgegenüber weisen solche Steigfelle in Richtung der typischen bzw. geplanten Fortbewegungsrichtung möglichst geringen Gleit- bzw. Reibungswiderstand gegenüber dem Untergrund, insbesondere gegenüber Schnee auf. Dabei ist es auch möglich, dass ein endloses Band 13 als Tragstruktur ausgebildet ist und ein Steighilfemittel 37 in Form eines Steigfelles auf das Band 13, beispielsweise mittels einer Klebeverbindung, aufgebracht ist.

Weiters kann vorgesehen sein, dass das Band 13 mittels einer bedarfsweise aktivier- und deaktivierbaren Kupplungsvorrichtung 38 ringförmig schließ- und auftrennbar ist. Eine derartige Kupplungsvorrichtung 38 kann beispielsweise in Form von ineinandergreifenden Krallen ausgebildet sein. Ebenso ist eine scharnierartige Ausführung denkbar. Alternativ dazu kann vorgesehen sein, dass das ringförmige Band 13 untrennbar miteinander verbundene, insbesondere miteinander verschweißte Bandenden 39 aufweist. Analog dazu ist es auch möglich, das Band 13 einteilig geschlossen aufzubauen, insbesondere durch spritzgusstechnische Maßnahmen ringförmig zu produzieren. Die Montage bzw. Demontage eines derartigen Endlosbandes mit untrennbar miteinander verbundenen Bandenden 39 wird in weiterer Folge noch genauer erklärt.

Weiters kann vorgesehen sein, dass die Antriebsvorrichtung 17 und/oder die erste Umlenkvorrichtung 18 mittels einer Kupplungsvorrichtung 40, 41 am Gleitkörper 2 bedarfsweise montier- und demontierbar gehaltert ist. Eine derartige Möglichkeit zur Abnahme der Antriebsvorrichtung 17 bzw. der ersten Umlenkvorrichtung 18 kann sich positiv auf die Fahreigenschaften des Gleitkörpers 2, insbesondere im Abfahrtszustand, auswirken. Besonders die dadurch mögliche Verringerung der am Gleitkörper 2 befindlichen Massen wirkt sich hierbei positiv auf die Abfahrtseigenschaften aus. Um ein Entfernen der Antriebsvorrichtung 17 und/oder der ersten Umlenkvorrichtung 18 zu ermöglichen, kann vorgesehen sein, dass die Kupplungsvorrichtung 40, 41 ein erstes Kupplungselement 42 und ein damit korrespondierendes zweites Kupplungselement 43 umfasst. Das zweite Kupplungselement 43 ist dabei am Gleitkörper 2 festgelegt, insbesondere skifest ausgebildet, während das erste Kupplungselement 42 der Antriebsvorrichtung 17 bzw. der Umlenkvorrichtung 18 zugeordnet ist und mit den genannten Teilen eine bauliche Einheit bildet. Eine Koppelungsbewegung 44 zwischen dem ersten Kupplungselement 42 und dem zweiten Kupplungselement 43 verläuft idealerweise im Wesentlichen in Längsrichtung 16 des Gleitkörpers 2 und ist jeweils in Richtung zur Längsmitte 45 des Gleitkörpers 2 ausgerichtet. Endanschläge bezüglich dieser Koppelungsbewegung 44 können dabei die Soll- bzw. Endpositionen gegenüber dem Gleitkörper 2 definieren.

Das erste Kupplungselement 42 kann beispielsweise ein Stab mit rechteckigem Querschnitt sein, welcher in ein korrespondierendes, zweites Kupplungselement 43 in Form eines Hohlprofiles eingeschoben wird. Das erste Kupplungselement 43 ist hierbei fest mit der ersten Umlenkvorrichtung 18 bzw. mit der Antriebsvorrichtung 17 verbunden und das zweite Kupplungselement 43 ist mit dem Gleitkörper 2 verbunden bzw. integral in diesem ausgeformt.

Alternativ zur dargestellten Ausführungsvariante ist es auch möglich, dass für das erste Kupplungselement 42 ein anderes als das dargestellte Profil verwendet wird. In einer weiteren Ausführungsvariante kann vorgesehen sein, dass das erste Kupplungselement 42 so ausgebildet ist, dass es direkt auf den Gleitkörper 2 aufgesteckt werden kann und kein zweites Kupplungselement 43 erforderlich ist, welches mit dem ersten Kupplungselement 42 zusammenwirkt.

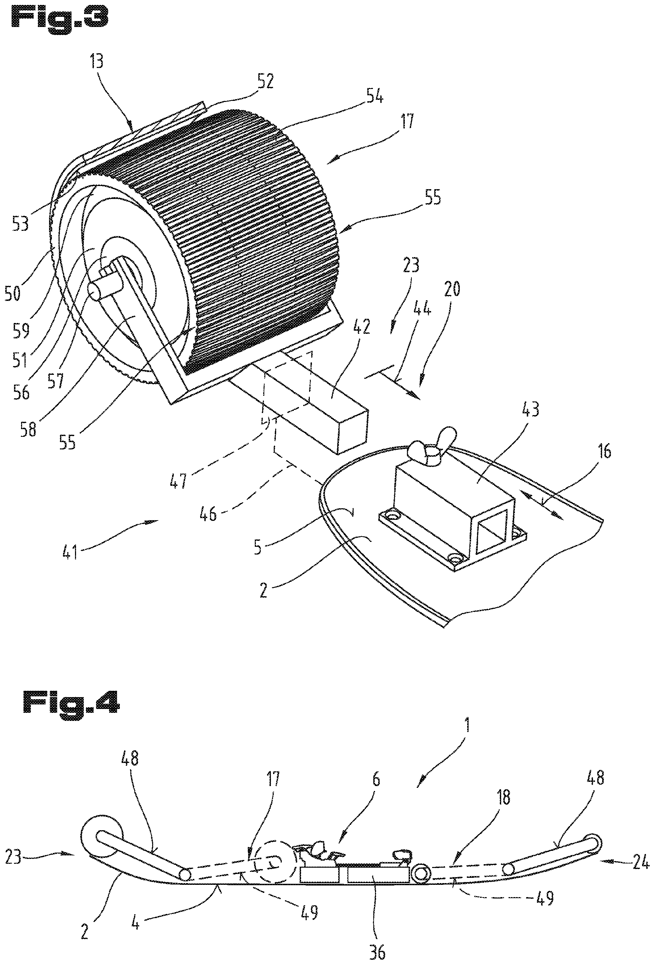

In allen Ausführungsvarianten ist es vorteilhaft, wenn eine Koppelungsbewegung 44, wie in Fig. 3 dargestellt, in Längsrichtung 16 des Gleitkörpers 2 verläuft, sodass dadurch die Antriebsvorrichtung 17 bzw. die erste Umlenkvorrichtung 18 durch die Vorspannung des Bandes 13 in Position gehalten werden können bzw. eine praktikable und funktionszuverlässige Konstruktion geschaffen werden kann.

Eine nötige Vorspannung des Bandes 13 kann hierbei durch den Gleitkörper 2 aufrecht gehalten werden, welcher durch seine Durchbiegung bzw. Vorspannung, insbesondere durch seine Bogenvorspannung bzw. Vorspannhöhe im Bereich der Bindungsmontagezone, wie eine Feder wirkt und somit das Band 13 spannt bzw. auf Spannung halten kann. Darüber hinaus ist es möglich, dass am ersten und/oder am zweiten Kupplungselement 42, 43 ein positionsvariabler Anschlag 47 ausgebildet ist, durch welchen die Antriebsvorrichtung 17 bzw. die erste Umlenkvorrichtung 18 relativ zum Gleitkörper 2 variabel positioniert werden kann und somit eine nötige Vorspannung variiert bzw. individuell eingestellt werden kann.

Alternativ dazu kann, wie in Fig. 4 ersichtlich, vorgesehen sein, dass die Antriebsvorrichtung 17 und/oder die erste Umlenkvorrichtung 18 zwischen einer das Band 13 aufspannenden Betriebsstellung 48 und einer das Band 13 freigebenden Ruhestellung 49 verstellbar, insbesondere um eine quer zur Längsrichtung des Gleitkörpers 2 verlaufende Achse verschwenkbar sind. Dadurch kann die Masse der Antriebsvorrichtung 17 und/oder der ersten Umlenkvorrichtung 18 näher in Richtung zur Bindungsvorrichtung 6 bzw. vergleichsweise zentraler zum Gleitkörper 2 verlagert werden, wodurch die Handlingeigenschaften des Gleitkörpers 2 im Abfahrtszustand bzw. Abfahrtsmodus verbessert werden.

Entsprechend einer zweckmäßigen Ausführung ist der Gleitkörper 2 hinsichtlich Geometrie und/oder Aufbau in Art eines sogenannten Tourenski ausgeführt. Besonders zweckmäßig kann es dabei sein, den Gleitkörper 2 bzw. den Tourenski als sogenannten "Twin-Tip-Ski" auszuführen, bei welchem das vordere und auch das hintere Längsende eine sogenannte Skischaufel ausbilden, insbesondere jeweils einen bogenförmig nach oben gebogenen Endabschnitt aufweisen. Eine solche Skikonstruktion bzw. Skigeometrie, welche häufig auch als "Full-Rocker" bezeichnet wird, kann vor allem deshalb zweckmäßig sein, weil dadurch die Antriebsvorrichtung 17 und die erste Umlenkvorrichtung 18 erhaben positioniert sind, insbesondere gegenüber dem Untergrund stärker angehoben bzw. distanziert sind. Dies bringt vor allem antriebstechnische Vorteile, nachdem unter anderem die Ansammlung von Schnee im Umlenkungsbereich des Bandes 13 minimiert bzw. hintan gehalten werden kann.

Fig. 3 zeigt eine perspektivische Ansicht einer Antriebsvorrichtung 17 des Sportgerätes 1. Wie in Fig. 3 ersichtlich, kann die Antriebsvorrichtung 17 eine Antriebsrolle 50 umfassen, welche dazu geeignet ist, ein von einem Elektromotor 51 aufgebrachtes Drehmoment auf das Band 13 zu übertragen. Um das vom Elektromotor 51 aufgebrachte Drehmoment besser auf das Band 13 übertragen zu können, kann vorgesehen sein, dass eine Verzahnung 52 an einer Innenseite 53 des Bandes 13 angeordnet ist. Diese Verzahnung 52 kann mit einer korrespondierenden Verzahnung 54 der Antriebsrolle 50 in kämmendem Eingriff stehen. Somit kann ein erhöhtes Drehmoment gegenüber einer Ausführung eines Bandes 13 mit flacher Innenseite 53 und einer Antriebsrolle 50 mit glatter Außenkontur erreicht werden. Nichtsdestotrotz ist natürlich auch eine derartige Ausführungsform mit Flachriemen und Flachriemenscheibe möglich.

Weiters kann vorgesehen sein, dass die Antriebsrolle 50 an dessen umfangsseitigen Außenmantel eine Bombierung 55 aufweist, durch welche der mittige bzw. zentral ausgerichtete Lauf des Bandes 13 verbessert wird bzw. eine seitliche Abwälzbewegung des Bandes 13 hintan gehalten werden kann. Diese Bombierung 55 ist zweckmäßigerweise dergestalt, dass die Antriebsrolle 50 in Bezug auf die axiale Mitte einen geringfügig größeren Durchmesser aufweist, als an ihren axialen Stirnenden.

Darüber hinaus kann vorgesehen sein, dass die Antriebsvorrichtung 17, insbesondere der Bereich in welchem das Band 13 auf die Antriebsrolle 50 aufläuft, eingehaust ist. Wenn Schnee zwischen das Band 13 und die Antriebsrolle 50 gelangt, besteht die Möglichkeit, dass bedingt durch den Schnee das Band 13 schief läuft. Eine derartige Einhausung bringt den Vorteil mit sich, dass ein derartiger Schieflauf hintan gehalten wird, da der Schnee möglichst von der Antriebsrolle 50 ferngehalten wird. Eine derartige Einhausung kann beispielsweise durch Abdeckplatten aus Kunststoff realisiert werden.

Gemäß der in Fig. 3 dargestellten Ausführungsform ist es möglich, dass der Elektromotor 51 als Radnabenmotor 56 ausgeführt ist. Hierbei ist es sinnvoll, wenn eine Achse 57 des Radnabenmotors 56 in einer entsprechenden Aufnahmegabel 58 aufgenommen bzw. mit dieser fixiert ist. Insbesondere ist dabei die Achse 57 des Radnabenmotors 56 mit der Aufnahmegabel 58 drehfest verbunden. Die Aufnahmegabel 58 kann direkt mit einem ersten Kupplungselement 42 der Kupplungsvorrichtung 41 verbunden sein. Bei einer Ausführungsvariante mit Radnabenmotor 56 ist es sinnvoll, wenn ein um die Achse 57 ausgebildeter, hohlzylindrischer Rotor 59 des Radnabenmotors 56 die Antriebsrolle 50 direkt aufnimmt. Weiters kann auch vorgesehen sein, dass der Rotor 59 des Radnabenmotors 56 an dessen außenseitigen Umfang direkt als Antriebsrolle 50 ausgebildet ist.

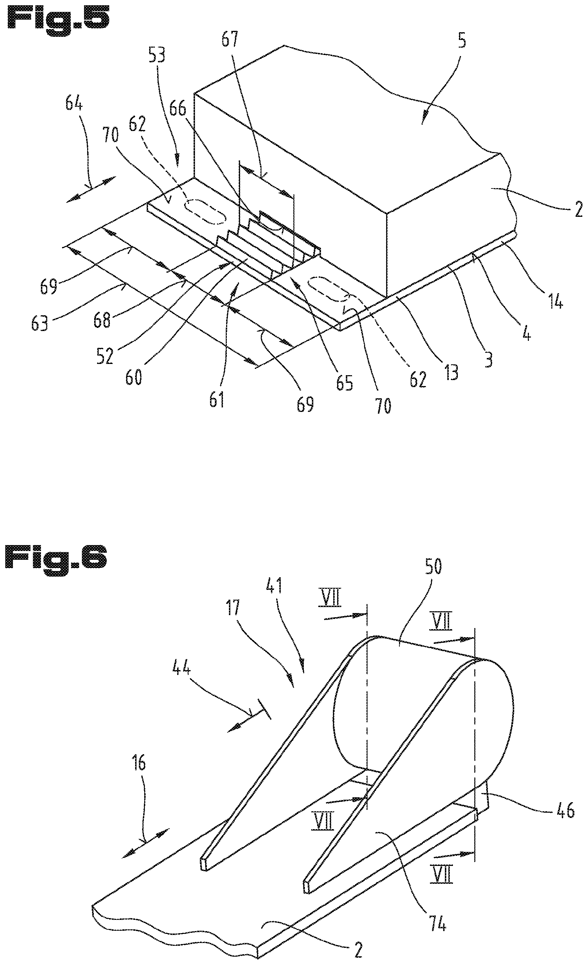

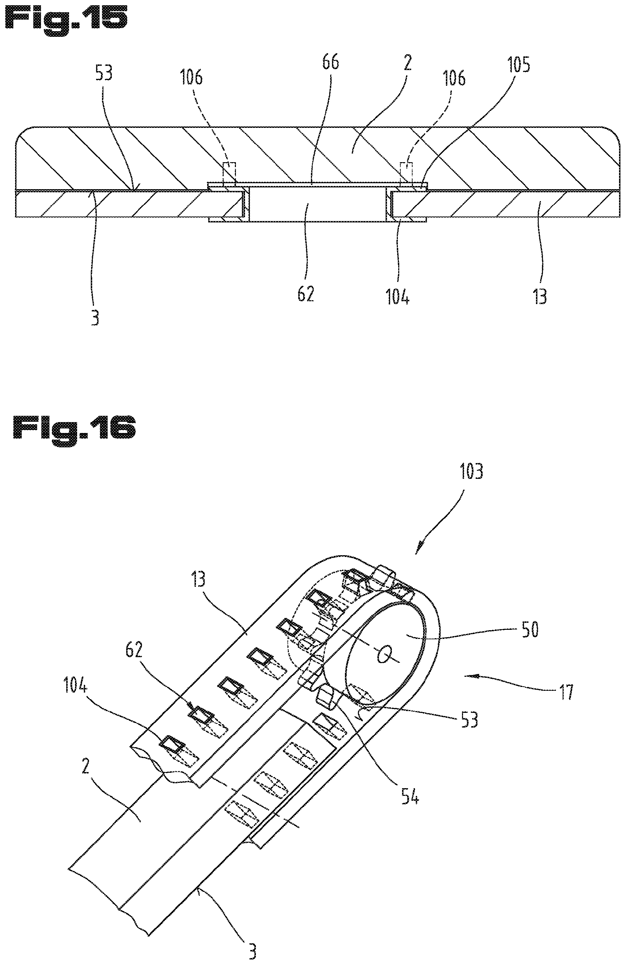

Fig. 5 zeigt in einer perspektivischen Darstellung ein schematisches Modell eines Bandes 13, insbesondere des unteren bzw. ersten Abschnittes 14, welches an der Unterseite 3 des Gleitkörpers 2 anliegt und an diesem verläuft bzw. relativbeweglich entlanggleitet. Wie in dieser Darstellung ersichtlich, kann vorgesehen sein, dass das Band 13 an dessen dem Gleitkörper 2 zugewandter Innenseite 53 zumindest abschnittsweise Querstege 60 oder sich zwischen dessen Innenseite 53 und einer Außenseite 61 erstreckende Durchbrüche 62 - Fig. 15 - aufweist. Derartige Querstege 60 oder Durchbrüche 62 können eine Verzahnung 52 bilden. Es kann vorgesehen sein, dass sich die Verzahnung 52 über die komplette Breite 63 des Bandes 13 erstreckt.

In einer weiteren in Fig. 5 dargestellten Ausführungsvariante kann jedoch auch vorgesehen sein, dass das Band 13 an dessen Innenseite 53 zumindest einen sich in Bandlängsrichtung 64 zumindest abschnittsweise erstreckenden Steg 65 aufweist, welcher in einer korrespondierenden Ausnehmung 66 in der Gleitfläche 4 des Gleitkörpers 2 verläuft bzw. formschlüssig in diese Ausnehmung 66 eingreift. In dem in Fig. 5 dargestellten Ausführungsbeispiel ist der Steg 65 gleichzeitig als Verzahnung 52 ausgebildet, wodurch sich die Verzahnung 52 nicht über die komplette Breite 63 des Bandes 13 erstreckt. Vielmehr erstreckt sich der hier dargestellte Steg 65 nur über einen Teilabschnitt 68 der Breite 63 des Bandes 13. Zweckmäßig ist es dabei, wenn der Steg 65 längsmittig zum Band 13 ausgebildet ist.

Weiters ist es vorteilhaft, wenn an der Innenseite 53 des Bandes 13, in Bezug auf die Breite 63 des Bandes 13 gesehen, zumindest zwei außenliegende oder äußere Abschnitte 69 als reibungsvermindernde Gleitoberflächen 70 ausgebildet sind. Diese Gleitoberflächen 70 des Bandes 13 sind im Aufstiegszustand des Sportgerätes 1 gegenüberliegend zu der Gleitfläche 4 des Gleitkörpers 2 angeordnet, und kontaktieren diese. Die reibungsvermindernden Gleitoberflächen 70 können durch Kunststoffoberflächen bzw. durch beschichtete oder mit Gleitmittel versehene Oberflächen an der Innenseite des 70 des Bandes gebildet sein, um so die Gleitreibung bzw. den Verschleiß gegenüber der typischerweise aus Kunststoff, insbesondere Polyethylen, gebildeten Unterseite 3 des Gleitkörpers 2 zu reduzieren bzw. zu minimieren.

In den Figuren 6 und 7 ist eine weitere und gegebenenfalls für sich eigenständige Ausführungsform der Antriebsvorrichtung 17 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Fig. 6 zeigt die Antriebsvorrichtung 17 in einer perspektivischen Ansicht und Fig. 7 eine Schnittdarstellung gemäß der Schnittlinie VII-VII in Fig. 6. Die hier dargestellte Antriebsvorrichtung 17 ist mit zumindest einer Haltekralle 46 ausgestattet, sodass sie direkt auf den Gleitkörper 2 aufgeschoben bzw. auf diesem befestigt werden kann, ohne am Gleitkörper 2 eine entsprechende mit der zumindest einen Haltekralle 46 korrespondierende Kupplungsvorrichtung zu benötigen. Dadurch kann der Gleitkörper 2 im Abfahrtszustand möglichst frei von zusätzlichen Komponenten sein.

Wie in Fig. 7 ersichtlich, kann vorgesehen sein, dass die Antriebsvorrichtung 17 einen Elektromotor 51 und gegebenenfalls ein an den Elektromotor 51 gekoppeltes Untersetzungsgetriebe 0 umfasst. Weiters kann vorgesehen sein, dass die Antriebsvorrichtung 17 achsenlos ausgeführt ist, indem eine Antriebsrolle 50 der Antriebsvorrichtung 17 an wenigstens einem axialen Stirnende 72, vorzugsweise an beiden axialen Stirnenden 72, eine Drehlagerung 73 aufweist und über diese Drehlagerung 73 in Art eines Drehkranzes die achsen- bzw. wellenlose Umsetzung ermöglicht. Durch diese Drehlagerung 73 mit ihrer quer zur Längsrichtung 16 im Wesentlichen parallel zur Unterseite 3 des Gleitkörpers 2 verlaufenden Drehachse kann die Antriebsrolle 50 mit einem am Gleitkörper 2 festgelegten Lagerbock 74 drehbeweglich verbunden sein. Durch eine derartige Ausführungsform kann die Antriebsrolle 50 möglichst dünnwandig ausgeführt werden, um das Gewicht der Antriebsrolle 50 zu minimieren. Durch diese Drehlagerung 73 in Art eines Drehkranzes zwischen Antriebsrolle 50 und Lagerbock 74 kann außerdem eine hohe Robustheit bzw. Belastbarkeit bei relativ geringem Gewicht erzielt werden.

Um weiteres Gewicht einzusparen, kann vorgesehen sein, dass die Drehlagerung 73 beispielsweise als Gleitlagerung ausgeführt ist. Alternativ dazu kann jedoch auch vorgesehen sein, dass die Drehlagerung 73 als Wälzlagerung, wie etwa als Nadellager, ausgeführt ist. Ein Durchmesser dieser Gleit- bzw. Wälzlagerung kann zweckmäßigerweise nur geringfügig kleiner bemessen sein, als der Durchmesser der Antriebsrolle 50. Dadurch sind Vorteile hinsichtlich Stabilität und Leichtlauf erzielbar. Der Lagerbock 74 kann gleichzeitig als Gehäuse und/oder als Aufnahme für die Haltekrallen 46 dienen, wodurch die Antriebsvorrichtung 17 direkt am Gleitkörper 2 befestigt werden kann. Weiters kann der Lagerbock 74 gleichzeitig als Aufnahme bzw. als Befestigungsmöglichkeit für den Elektromotor 51 und das Untersetzungsgetriebe 0 dienen.

Wie in Fig. 7 weiters ersichtlich, kann vorgesehen sein, dass die Antriebsrolle 50 als dünnwandiger Hohlzylinder 75 ausgebildet ist und der Elektromotor 51 sowie das gegebenenfalls vorgesehene Untersetzungsgetriebe 0 innerhalb der hohlzylindrischen Antriebsrolle 50 angeordnet sind. Dadurch kann die Antriebsvorrichtung 17 möglichst kompakt und platzsparend aufgebaut werden, wobei der Elektromotor 51 sowie das Untersetzungsgetriebe 0 zusätzlich gegenüber Umgebungseinflüssen geschützt sind. Entsprechend einer zweckmäßigen Maßnahme kann auch vorgesehen sein, dass plattenartige Trägerelemente des Lagerbocks 74 an den axialen Stirnenden der Antriebsrolle 50 Abdeckungen bzw. Abdeckplatten ausbilden, welche den hohlzylindrischen Innenraum der Antriebsrolle 50 gegenüber der Außenumgebung abgrenzen bzw. abdichten.

Am Lagerbock 74 ist wenigstens ein Befestigungselement 76 vorgesehen, durch welches der Elektromotor 51 bzw. das Untersetzungsgetriebe 0 am Lagerbock 74 befestigt ist bzw. verdrehfest gehaltert werden kann. Das wenigstens eine Befestigungselement 76 kann durch Haltekonsolen bzw. Schrauben definiert sein.

Weiters kann vorgesehen sein, dass die Antriebsrolle 50 an dessen hohlzylindrischen Innenwand 77 einen Zahnkranz 78 aufweist bzw. ausbildet, durch welchen die Antriebsrolle 50 mittels des Elektromotors 51 oder des zwischengeschalteten Untersetzungsgetriebes 0 antreibbar ist. Dadurch kann ein robustes und einfaches bzw. gewichtssparendes Untersetzungsgetriebe 71' zwischen Elektromotor 51 und Antriebsrolle 50 geschaffen werden, welches die Ausbildung eines zusätzlichen Untersetzungsgetriebes 71 gegebenenfalls erübrigen kann. Durch die soeben beschriebenen Merkmale der Antriebsvorrichtung 17 wird ermöglicht, dass der Elektromotor 51 sowie das Untersetzungsgetriebe 0 via den Lagerbock 74 starr mit dem Gleitkörper 2 verbunden sind. Somit kann die Antriebsrolle 50 durch den Elektromotor 51 bzw. das Untersetzungsgetriebe 0 in Drehbewegung versetzt werden und somit das umlaufende Band 13 aktiv angetrieben werden kann.

Der Elektromotor 51 bzw. das Untersetzungsgetriebe 0 können, wie in Fig. 7 ersichtlich, folgendermaßen angeordnet sein. Der Elektromotor 51 ist bevorzugt so verbaut, dass er innerhalb der Antriebsrolle 50 bzw. relativ nahe zur holzylindrischen Innenwand 77 angeordnet ist. Die Lage des Elektromotors 51 wird hierbei bevorzugt so gewählt, dass eine Achse 79 des Elektromotors 51 parallel zu einer Achse 80 der Antriebsrolle 50 verläuft. Im verbleibenden Raum innerhalb der Antriebsrolle 50 kann vorgesehen sein, dass das Untersetzungsgetriebe 0 angeordnet ist. Auch hierbei ist es vorteilhaft, wenn eine Achse 81 des Untersetzungsgetriebes 0 parallel zur Achse 80 der Antriebsrolle 50 verläuft. Somit sind der Elektromotor 51 und das Untersetzungsgetriebe 0 achsparallel zueinander ausgerichtet und derart innerhalb der Antriebsrolle 50 aufgenommen. Zur Übertragung des Drehmomentes vom Elektromotor 51 auf das Untersetzungsgetriebe 0 kann vorgesehen sein, dass jeweils zumindest ein Zahnrad 82 ausgangsseitig des Elektromotors 51 und eingangsseitig des Untersetzungsgetriebes 0 angeordnet ist. Alternativ zu einem solchen Paar aus Zahnrädern 82 kann auch vorgesehen sein, dass ein Zahnriementrieb zur Drehmomentübertragung oder eine sonstige drehmomentübertragende Einrichtung zwischen Elektromotor 51 und Untersetzungsgetriebe 0 angeordnet ist.

Das Untersetzungsgetriebe 0 an sich kann etwa als Planetengetriebe oder als Getriebe mit Stirnverzahnung ausgeführt sein. Abtriebsseitig des Untersetzungsgetriebes 0 kann vorgesehen sein, dass ein Ritzel 83 angeordnet ist, welches in den Zahnkranz 78 eingreift und dadurch das vom Elektromotor 51 aufgebrachte Drehmoment auf die Antriebsrolle 50 überträgt. Das Ritzel 83 ist hierbei im Vergleich zum Zahnkranz 78 möglichst klein ausgeführt, sodass eine möglichst große Untersetzung erreicht werden kann, wie dies vorhergehend bereits dargelegt wurde. Durch diese Untersetzung zwischen Ritzel 83 und Zahnkranz 78 kann die notwendige Untersetzung im allfälligen Untersetzungsgetriebe 0 vermindert werden, wodurch dieses kleiner ausgeführt werden kann.

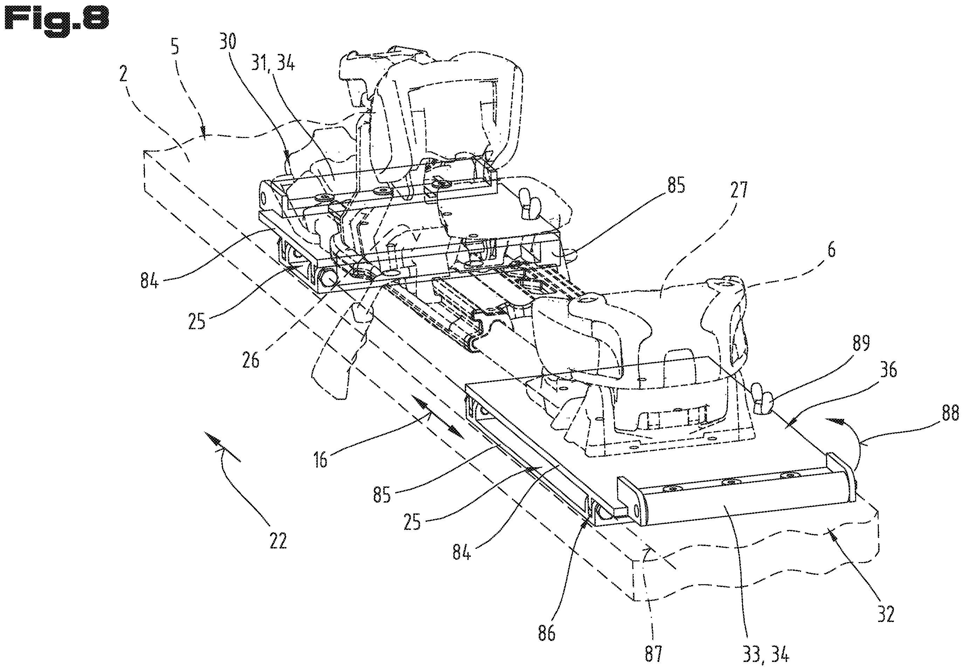

Fig. 8 zeigt eine erste mögliche Ausführungsform einer Tragkonstruktion 36, welche an der Oberseite 5 des Gleitkörpers 2 angebracht ist. Diese Tragkonstruktion 36 dient als Aufnahme für die Bindungsvorrichtung 6 bzw. zur lastabtragenden Abstützung zumindest des sogenannten Vorderbackens der Bindungsvorrichtung 6 und beinhaltet den Freiraum 25 zur Hindurchführung des Bandes 13, insbesondere des zweiten Abschnittes 15 unterhalb der Bindungsvorrichtung 6.

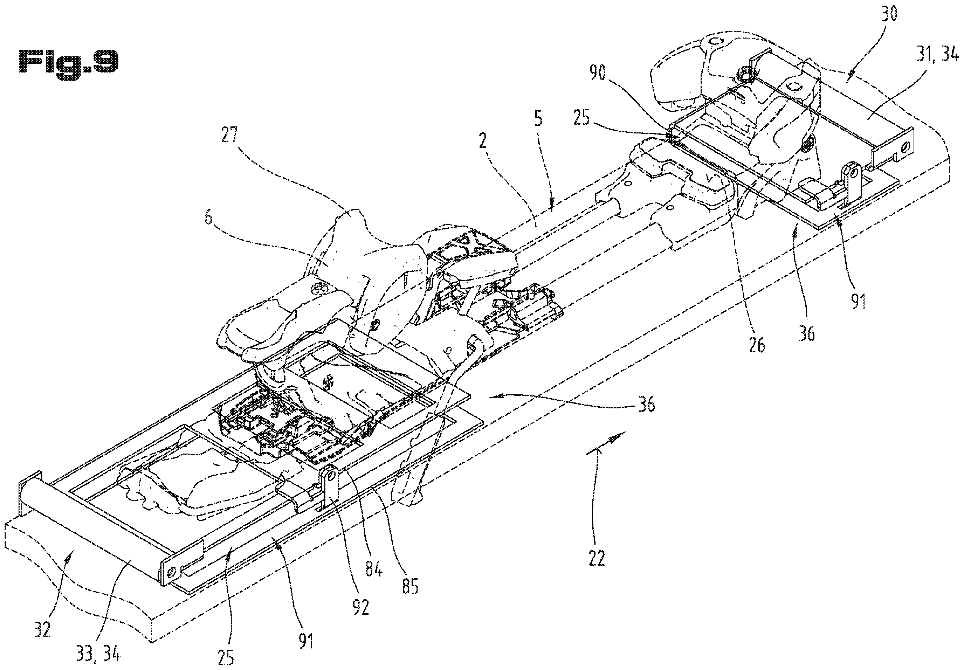

In der Fig. 9 ist eine weitere und gegebenenfalls für sich eigenständige Ausführungsform der Tragkonstruktion 36 gezeigt, wobei wiederum für gleiche Teile gleiche Bezugszeichen bzw. Bauteilbezeichnungen wie in Fig. 8 verwendet werden. Um unnötige Wiederholungen zu vermeiden, wird auf die detaillierte Beschreibung in der vorangegangenen Fig. 8 hingewiesen bzw. Bezug genommen.

Sämtliche in Fig. 8 und Fig. 9 beschriebenen Ausführungsmerkmale bzw. Ausführungsformen müssen dabei nicht als baulich eigenständige Tragkonstruktion 36 ausgeführt sein, sondern es ist auch denkbar, dass die Ausgestaltungsmerkmale und Funktionen direkt in die Bindungsvorrichtung 6, insbesondere in dessen Vorderbacken oder zehenseitiges Halteelement und/oder in dessen Fersenbacken oder fersenseitiges Halteelement, integriert sind.

Die Ausgestaltung der Tragkonstruktion 36 bzw. der Bindungsvorrichtung 6 ist stark davon abhängig, ob das Band 13 eine Kupplungsvorrichtung 38 aufweist oder ob es endlos verschweißt bzw. einteilig ausgeführt ist. Im Falle der Ausgestaltung eines Bandes 13 mit Kupplungsvorrichtung 38 kann es ausreichend sein, wenn der Freiraum 25 in die Tragkonstruktion 36 eingebracht ist und die Tragkonstruktion 36 als starres bzw. als nicht abnehmbares oder nicht aufschwenkbares Element ausgeführt ist.

Zum Einbau bzw. Ausbau des Bandes 13 gegenüber dem Sportgerät 1 kann hierbei die Kupplungsvorrichtung 38 des Bandes 13 gelöst werden, wodurch die beiden Bandenden 39 voneinander getrennt werden und das Band 13 in Längsrichtung 16 des Gleitkörpers 2 in den Freiraum 25 der Tragkonstruktion 36 eingefädelt bzw. davon ausgefädelt werden kann.

Wird jedoch ein endlos verschweißtes bzw. ein einteilig ausgeführtes Band 13 verwendet, so ist es notwendig, dass die Tragkonstruktion 36 einen Mechanismus aufweist, um das Band 13 in den Freiraum 25 unterhalb der Schuhaufstandsebene 26 einbringen und aus diesem wieder herausnehmen zu können. Eine mögliche Ausführungsform für einen derartigen Mechanismus wird in den Fig. 8 und 9 gezeigt und beschrieben.

In der in Fig. 8 dargestellten Ausführungsform umfasst die Tragkonstruktion 36 ein oberes Element 84 und ein unteres Element 85, welche durch ein Drehgelenk 86 miteinander verbunden sind, sodass eine Schwenkachse 87 ausgebildet ist. Die Schwenkachse 87 verläuft zweckmäßigerweise parallel zur Längsrichtung 16 des Gleitkörpers 2, insbesondere im Wesentlichen achsparallel zur Längsachse des Gleitkörpers 2. Dadurch ist bei Ausführung einer Schwenkbewegung 88 das obere Element 84, an welchem die Bindungsvorrichtung 6 bzw. zumindest eine vordere und/oder hintere Komponente der Bindungsvorrichtung 6 angebracht ist, relativ zum unteren Element 85 aufschwenkbar, wodurch das Band 13, insbesondere der zweite Abschnitt 15 des Bandes 13 in den Freiraum 25 mühelos eingebracht werden kann. Nach dem Einlegen des Bandes 13 wird das obere Element 84 wieder zugeschwenkt bzw. nach unten geklappt. Das obere Element 84, insbesondere die dritte Umlenkvorrichtung 31 und/oder die vierte Umlenkvorrichtung 33 dienen beim nach unten Schwenken des oberen Elementes 84 gleichzeitig als Spannvorrichtung, wodurch das Band 13 vorgespannt bzw. aufgespannt werden kann. Die durch den Zuschwenkvorgang auf das Band 13 aufgebrachte Vorspannung wird durch leichte, elastische Verformung des Gleitkörpers 2 bzw. durch die Steifigkeit des Gleitkörpers 2 aufgenommen und im Gleitkörper 2 gespeichert. Dadurch dient der Gleitkörper 2 als Feder zur Aufnahme der auf das Band 13 aufgebrachten Vorspannkraft. Durch die entsprechende Ausführung ist ein müheloses und unkompliziertes Handling erzielbar, nachdem die Tragkonstruktion 36 dadurch auch als Bedienhilfe bzw. als Hebelmechanismus zur einfachen Montage bzw. leichtgängigen Aufspannung des Bandes 13 dienen kann.

Mittels einem Befestigungsmittel 89, welches beispielsweise als Schraube oder als Rastvorrichtung bzw. Klinke ausgeführt sein kann, kann nach dem Schließen des oberen Elementes 84 die Tragkonstruktion 36 in ihrer geschlossenen, betriebsbereiten Position fixiert werden.

Fig. 9 zeigt die weitere Ausführungsvariante der Tragkonstruktion 36, in welcher das obere Element 84 und das untere Element 85 durch einen seitlichen Steg 90 starr miteinander verbunden sind. Das Band 13 kann bei dieser Ausführungsvariante durch eine seitliche Öffnung 91, welche gegenüberliegend zum seitlichen Steg 90 angeordnet ist, in den Freiraum 25 eingebracht werden. Durch diese seitliche Öffnung 91 bzw. durch diesen seitlichen Einführschlitz der Tragkonstruktion 36 ist eine einfache Montage und Demontage des Bandes 13 gegenüber dem Gleitkörper 2 erzielbar. Darüber hinaus sind die hierfür erforderlichen baulichen Maßnahmen unkompliziert und robust.

Um ein seitliches Hinausgleiten des Bandes 13 aus dem Freiraum 25 zu unterbinden bzw. um der Tragkonstruktion 36 ausreichende Stabilität bzw. Unnachgiebigkeit zu verleihen, kann vorgesehen sein, dass die Tragkonstruktion 36 ein Verschlusselement 92 umfasst, welches die seitliche Öffnung 91 verschließt. Vorzugsweise ist dieses Verschlusselement 92 schwenkbar am oberen Element 84 angeordnet, sodass es leicht geöffnet bzw. wieder verschlossen werden kann. Das Verschlusselement 92 kann dabei im aktiven bzw. geschlossenen Zustand auch Stützelement für das obere Element 84 fungieren, wie dies in Fig. 9 schematisch veranschaulicht wurde.

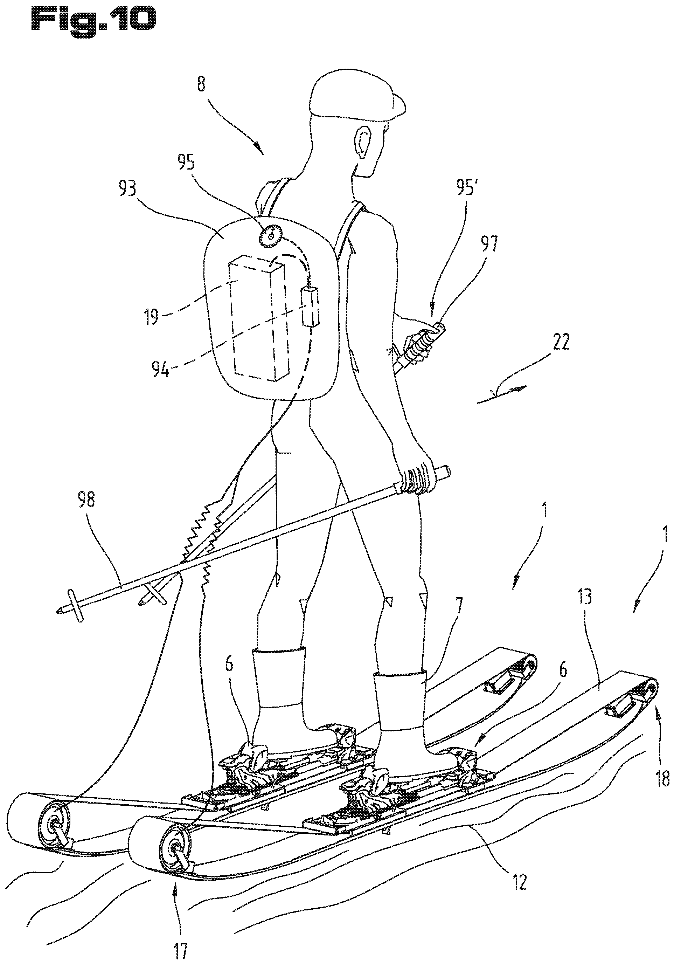

Fig. 10 zeigt eine perspektivische Darstellung eines Sportgerätes 1 bzw. zweier Sportgeräte 1 auf welchen sich ein Benutzer 8 befindet. Wie in dieser Figur ersichtlich ist vorgesehen, dass das Sportgerät 1 paarweise genutzt wird, wobei ein erstes Sportgerät 1 dem linken Fuß des Benutzers 8 zugeordnet ist und ein weiteres Sportgerät 1 dem rechten Fuß des Benutzers 8 zugeordnet ist. Insbesondere sind die Sportschuhe 7 des Benutzers 8 via die Bindungsvorrichtungen 6 gegenüber den Sportgeräten 1 bedarfsweise koppel- und entkoppelbar. Wie in dieser Figur weiters dargestellt, kann vorgesehen sein, dass der Benutzer 8 einen Rucksack 93 trägt, in welchem die Energieversorgungsquelle 19 in Form eines elektrochemischen Akkupacks, insbesondere eines Bleigel-, Nickel-Cadmium- (NiCd), Nickel-Metallhydrid- (NiMH) oder Lithium-Ionen- (Li-Ion) Akkus vorgesehen ist. Alternativ oder in Kombination dazu ist es auch möglich, dass die elektrochemischen Energiespeicher bzw. Energieversorgungsquellen 19 in einem Hüftgurt bzw. in einer Jacke des Benutzers angeordnet sind.

Durch diese Energieversorgungsquelle 19 kann die Antriebsvorrichtung 17 mit elektrischer Energie versorgt werden. Weiters kann vorgesehen sein, dass zwischen Energieversorgungsquelle 19 und Antriebsvorrichtung 17 eine Regulierungs- bzw. Steuereinheit 94 zwischengeschaltet ist, durch welche die Antriebsvorrichtung 17 angesteuert bzw. kontrolliert mit elektrischer Energie versorgt werden kann.

Die Steuereinheit 94 kann wenigstens eine digitale Eingabevorrichtung 0, 95' oder ein Potentiometer umfassen, durch welche eine Drehzahl und damit einhergehend eine Bewegungsgeschwindigkeit und/oder eine Einschaltdauer bzw. Schaltzeitpunkte der Antriebsvorrichtung 17 vorgebbar oder variabel einstellbar sind. Die elektrische Antriebsenergie für die Antriebsvorrichtung 17 kann dabei durch beliebige aus dem Stand der Technik bekannte Steuer- und Regulierungsvorrichtungen konditioniert bzw. eingestellt und variiert werden.

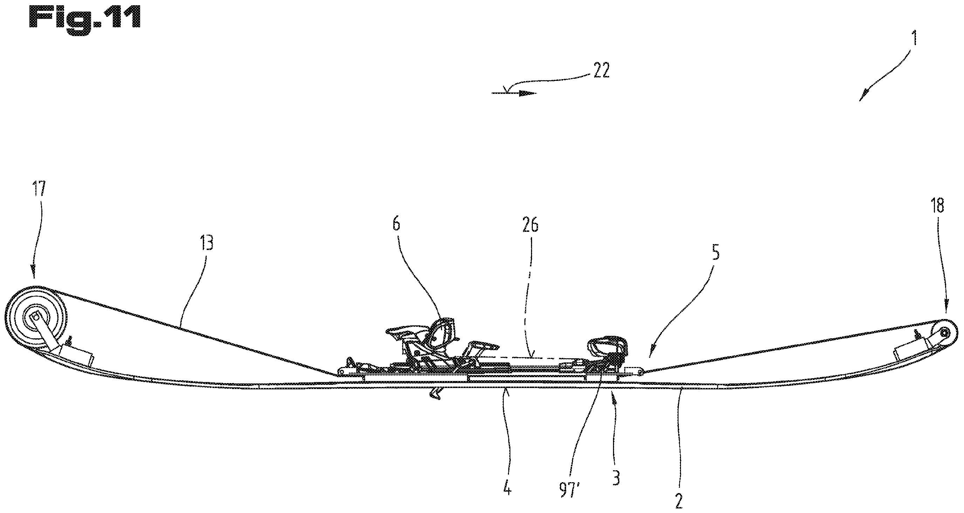

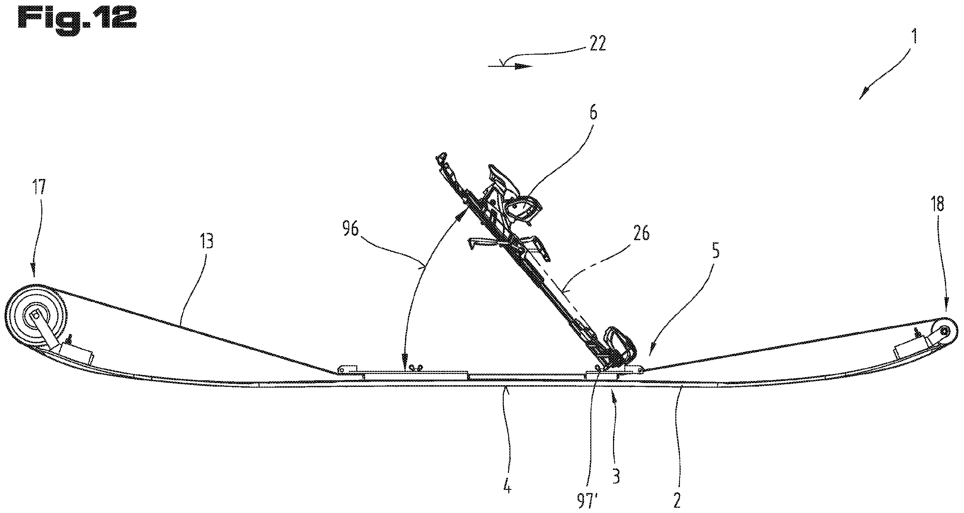

In den Fig. 11, 12 sind Seitenansichten des Sportgerätes 1 dargestellt. Bei der Darstellung gemäß Fig. 11 befindet sich die Bindungsvorrichtung 6 in ihrer Grundstellung, in welcher die Schuhaufstandsebene 26 im Wesentlichen parallel zu der unterhalb der Bindungsvorrichtung 6 befindlichen Gleitfläche 4 des Gleitkörpers 2 ausgerichtet ist.

Fig. 12 zeigt eine Seitenansicht des Sportgerätes 1 entsprechend Fig. 11, wobei sich in dieser Ansicht die Bindungsvorrichtung 6 in ihrer Gehstellung bzw. in einer hochgeschwenkten Stellung befindet und somit eine gewisse Drehwinkelstellung 96 gegenüber der Grundstellung vorliegt. Der im Folgenden beschriebene Funktionsablauf zum Betrieb des Sportgerätes 1 wird unter Bezugnahme und Zusammenschau der Fig. 10, 11 und 12 beschrieben.

Lediglich der Vollständigkeit wegen wird darauf verwiesen, dass es anstelle der dargestellten Bindungsvorrichtung 6 mit einem mitverschwenkten Fersenautomat bzw. Fersenhalteelement selbstverständlich auch möglich ist, eine Bindungsvorrichtung 6 vorzusehen, bei welcher kein solches Fersenhaltelement vorgesehen ist, oder bei welcher das Fersenhalteelement skifest positioniert ist und daher nicht mitverschwenkt wird.

Ausgehend von einer neutralen Stellung, wie sie in Fig. 10 dargestellt ist, macht der Benutzer 8 mit seinem rechten Fuß einen Schritt nach vorne. In Fortbewegungsrichtung 22 gesehen, befindet sich nun der rechte Fuß des Benutzers 8 weiter vorne als der linke Fuß des Benutzers 8. Nun setzt der Benutzer 8 an, seinen linken Fuß nach vorne zu bringen. Während dieser Bewegung, bei welcher der linke Fuß ausgehend von einer Position hinter dem rechten Fuß vor den rechten Fuß geschoben wird, wird die Antriebsvorrichtung 17 des am linken Fuß angeschnallten Sportgerätes 1 mittels einer Eingabevorrichtung 0 bzw. 95' manuell aktiviert und/oder mittels der Steuereinheit 94 automatisiert oder teilautomatisiert aktiviert. Dadurch wird das Band 13 angetrieben und somit bewegt sich das am linken Fuß des Benutzers 8 montierte Sportgerät 1 in Fortbewegungsrichtung 22. Durch diese aktive bzw. elektromotorische Bewegung des Sportgerätes 1 wird der Benutzer 8 in seiner Gehbewegung durch das Sportgerät 1 unterstützt.

Entsprechend einer vorteilhaften Maßnahme kann die Steuereinheit 94 so programmiert sein, dass der Benutzer 8 via die Eingabevorrichtung 0, 95' an die Steuereinheit 94 nur einen Startimpuls geben muss, woraufhin das am linken Fuß angeschnallte Sportgerät 1 einen vordefinierten Weg entsprechend der Schrittlänge des Benutzers 8 verfährt. Alternativ oder in Kombination dazu kann auch eine Betätigungsdauer der Eingabevorrichtung 95' für die Aktivierungsdauer der Antriebsvorrichtung 17 bzw. für die letztendlichen Verfahrweg des Sportgerätes 1 maßgeblich sein. Alternativ oder in Kombination dazu kann auch ein sensorisches und/oder manuell zu betätigendes Erfassungsmittel 97, 97' an geeigneter Position, insbesondere im Greifbereich des Benutzers und/oder im Bereich der Bindungsvorrichtung 6, vorgesehen sein bzw. mit der Steuereinheit 94 verbunden sein. Darauf basierend kann die Aktivierung bzw. Deaktivierung der Antrieb svorrichtung 17 vorgenommen werden.

Wenn nun der linke Fuß des Benutzers 8 entsprechend weit vor den rechten Fuß verschoben ist, so wird die Verfahrbewegung des am linken Fuß angeschnallten Sportgerätes 1 gestoppt. Der Benutzer 8 kann nun seinen rechten Fuß nach vorne bewegen, wobei analog zum bereits beschriebenen Vorgang die Antriebsvorrichtung 17 des am rechten Fuß montierten Sportgerätes 1 in Bewegung gesetzt wird.

Die Eingabevorrichtung 95' bzw. das Erfassungsmittel 0 zum Starten des Bewegungsvorganges eines Sportgerätes 1 kann beispielsweise in Form eines Tasters oder eines Steuerhebels ausgeführt sein, welcher an einem Schistock 98 befestigt bzw. in einen Schistock 98 integriert sein kann. In diesem Fall wird der Steuerbefehl vom Benutzer aktiv und gezielt gegeben.

Alternativ oder in Kombination dazu kann vorgesehen sein, dass das Erfassungsmittel 0' - wie vorhergehend dargelegt - dem Sportgerät 1 zugeordnet ist, beispielsweise in die Bindungsvorrichtung 6 integriert ist, wobei dieses sensorische Erfassungsmittel 97' zur Erfassung eines physiologisch bedingten Bewegungszustandes des Benutzers 8 während des Gehens dient, wie dies in den Fig. 11, 12 schematisch dargestellt ist. Dies kann beispielsweise eine vorbestimmte Drehwinkelstellung 96 sein, in welche die Bindungsvorrichtung 6 im Zuge eines Schrittes des Benutzers 8 verschwenkt ist.

Alternativ dazu kann auch vorgesehen sein, dass in der Bindungsvorrichtung 6 oder aber in der Tragkonstruktion 36 ein Drucksensor verbaut ist, welcher als sensorisches Erfassungsmittel 0' dient. Dadurch kann beispielsweise bei Veränderung der Belastung, welche der Benutzer 8 auf das Sportgerät 1 ausübt, der Befehl zum Start der Verfahrbewegung gegeben werden. Weiters kann vorgesehen sein, dass der Druck, welcher auf die Bindungsvorrichtung 6 ausgeübt werden muss, um das Erfassungsmittel 0' zu aktivieren, voreingestellt werden kann. Dadurch kann das Sportgerät 1 für die Benutzung durch verschiedene Benutzer 8 vorgesehen sein. Der einstellbare Druck auf die Bindungsvorrichtung 6 zum aktivieren des Erfassungsmittels 0' kann zwischen 70% und 100%, vorzugsweise zwischen 80% und 90% des Körpergewichts des Benutzers betragen. Somit kann der Impuls zum Starten der Verfahrbewegung auch durch den physiologischen Ablauf der Gehbewegung gegeben werden, wodurch der Benutzer 8 nicht bewusst die Verfahrbewegung initiieren muss.

In einer weiteren Lösungsvariante kann vorgesehen sein, dass das Erfassungsmittel 0'einen Beschleunigungssensor umfasst. Ein derartiger Beschleunigungssensor kann die Beschleunigung, welche beispielsweise auf die Bindungsvorrichtung 6 wirkt erfassen und aufgrund dieser gemessenen Werte die Verfahrbewegung der Antriebsvorrichtung 17 initiieren.

In einer weiteren Lösungsvariante kann vorgesehen sein, dass das Erfassungsmittel 0' ein berührungsloses Abstandsmessmittel umfasst. Dieses Abstandsmessmittel kann vorgesehen sein, um den Abstand der Bindungsvorrichtung 6 des am linken Fuß angebrachten Sportgerätes 1 zur Bindungsvorrichtung 6 des am rechten Fuß angebrachten Sportgerätes 1 zu erfassen und auf Basis der aktuellen Schrittfolge in der Gehbewegung des Benutzers 8 die Antriebsvorrichtung 17 zu steuern.

In wieder einer anderen Alternative ist es auch denkbar, dass in der Antriebsvorrichtung 17 oder in der Umlenkvorrichtung 18 des Bandes 13 ein Bewegungssensor verbaut ist. Durch einen derartigen Bewegungssensor kann ebenso ein Impuls zum Start der Fortbewegung bzw. der Antriebsbewegung basierend auf einer Initialbewegung des Benutzers gegeben werden. Fig. 13 zeigt ein weiteres Ausführungsbeispiel eines Sportgerätes 1, in welchem die Antriebsvorrichtung 17 direkt bzw. unmittelbar hinter der Bindungsvorrichtung 6 platziert ist. Dabei kann unter Zuhilfenahme von Umlenkrollen 99 der Umschlingungswinkel des Bandes 13 um die Antriebsvorrichtung 17 vergrößert werden.

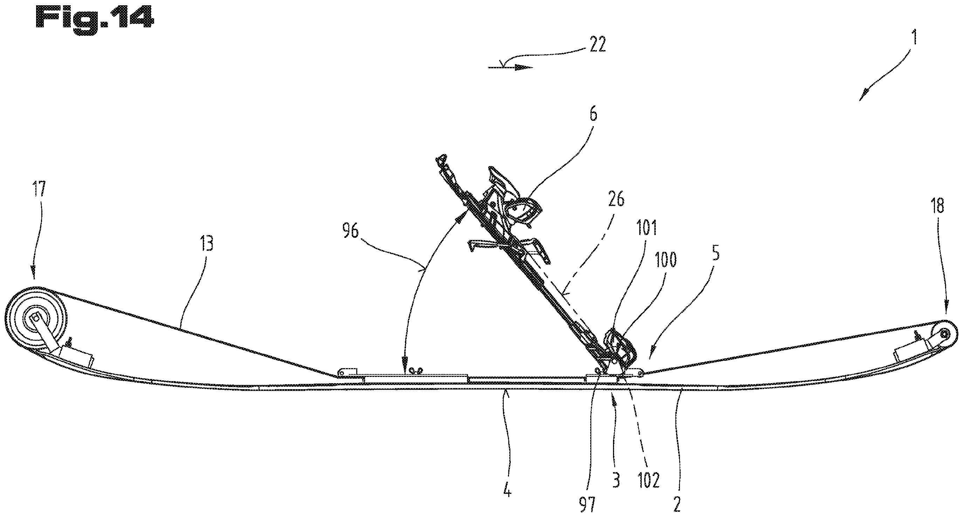

In Fig. 14 ist eine weitere und gegebenenfalls für sich eigenständige Ausführungsform des Sportgerätes 1 gezeigt, wobei wiederum für gleiche Teile gleiche Bezugszeichen bzw. Bauteilbezeichnungen wie in den vorhergehenden Figuren 1 bis 13 verwendet werden. Um unnötige Wiederholungen zu vermeiden, wird auf die detaillierte Beschreibung in den vorangegangenen Figuren 1 bis 13 hingewiesen bzw. Bezug genommen.

Entsprechend der Ausführungsform nach Fig. 14 kann vorgesehen sein, dass zusätzlich zur Antriebsvorrichtung 17 für das Band 13 ein Bindungsantrieb 100 am Sportgerät 1, insbesondere an der Bindungsvorrichtung 6 des Sportgerätes 1, angebracht ist. Der Bindungsantrieb 100 dient dazu, den Benutzer 8 in seiner Gehbewegung zusätzlich zu unterstützen. Insbesondere wird durch den Bindungsantrieb 100 die Bindungsvorrichtung 6 aktiv in eine Drehwinkelstellung 96 verschwenkt. Der Bindungsantrieb 100 ist somit durch einen Schwenkantrieb für die Bindungsvorrichtung 6 gebildet. Dadurch wird der Benutzer 8 bzw. zumindest dessen Fersenabschnitt aktiv nach oben gehoben, wodurch sich seine potentielle Energie erhöht. Der Bindungsantrieb 100 kann einen Elektromotor umfassen, welcher bedarfsweise über ein Untersetzungsgetriebe an die Bindungsvorrichtung 6 gekoppelt ist.

Zudem kann vorgesehen sein, dass der Bindungsantrieb 100 über einen Freilauf 101 an eine weitere Antriebsrolle 102 zum Antreiben des Bandes 13 gekoppelt ist. Wenn während der Gehbewegung der Benutzer 8 die in eine Drehwinkelstellung 96 bzw. in eine bestimmte Hochschwenkstellung verschwenkte Bindungsvorrichtung 6 mit seinem Körpergewicht belastet, so kann vorgesehen sein, dass die weitere Antriebsrolle 102 durch die Schwenkbewegung der Bindungsvorrichtung 6 von seiner hochgeschwenkten Drehwinkelstellung 96 in eine Grundstellung, aktiviert und angetrieben wird, sodass die Antriebsrolle 102 das Band 13 antreibt. Dadurch kann die gespeicherte potentielle Energie in Bewegungsenergie zur Fortbewegung des Sportgerätes 1 umgewandelt werden. Der Freilauf, welcher bevorzugt in die Antriebsrolle 102 integriert ist, ist hierbei notwendig, damit die Antriebsrolle 102 im Bedarfsfall frei mit dem Band 13 mitlaufen kann, wenn dieses durch die Antriebsvorrichtung 17 angetrieben wird.

In den Figuren 15 und 16 ist eine weitere und gegebenenfalls für sich eigenständige Ausführungsform des Sportgerätes 1 gezeigt, wobei wiederum für gleiche Teile gleiche Bezugszeichen bzw. Bauteilbezeichnungen wie in den vorhergehenden Figuren 1 bis 13 verwendet werden. Um unnötige Wiederholungen zu vermeiden, wird auf die detaillierte Beschreibung in den vorangegangenen Figuren 1 bis 13 hingewiesen bzw. Bezug genommen.

Fig. 15 zeigt eine perspektivische Ansicht einer Antriebsvorrichtung 17 welche eine Antriebsrolle 50 mit einer Außenverzahnung 54 umfasst. Die Verzahnung 54 kann - wie in Fig. 15 ersichtlich - so ausgebildet sein, dass diese nur in einem Mittelabschnitt 103 der Antriebsrolle 50 angebracht ist. Das von der Antriebsvorrichtung 17 angetriebene Band 13 kann hierbei so ausgebildet sein, dass längsmittig des Bandes 13 eine Vielzahl von Durchbrüchen 62 vorgesehen bzw. aneinandergereiht sind, mit welchen die Verzahnung 54 der Antriebsrolle 50 korrespondiert.

Weiters kann vorgesehen sein, dass die Durchbrüche 62 mit einer Öse 104 umrahmt bzw. zumindest abschnittsweise verkleidet sind. Dadurch kann die Belastbarkeit der Durchbrüche 62 erhöht werden. Wie in Fig. 15 ersichtlich, kann es dabei zweckmäßig sein, wenn die Verzahnung 54 während des Umlaufes des Bandes 13 um die Antriebsrolle 50 in die Durchbrüche 62 eingreift und durch die Durchbrüche 62 hindurchragt. Von Vorteil ist hierbei, dass zwischen Verzahnung 54 und Durchbruch 62 eine gute formschlüssige Verbindung aufgebaut werden kann, wodurch eine hohe Antriebskraft übertragen werden kann. Zusätzlich kann vorgesehen sein, dass die Verzahnung 54 und die Durchbrüche 62 als seitliche Führung für das Band 13 dienen.

Um die seitliche Führung bzw. den Umlauf des Bandes 13 zu verbessern, kann auch vorgesehen sein, dass die einzelnen Zähne der Verzahnung 54 seitliche und/oder frontseitige bzw. rückseitige Anschrägungen aufweisen, sodass das Einführen eines Zahnes in einen Durchbruch 62 erleichtert wird.

Eine derartige Ausführungsvariante, wie sie in Fig. 15 beschrieben ist, weist weiters den Vorteil auf, dass Schnee, welcher sich am Band 13 bzw. an dessen Innenseite 53 anlegt bzw. ansammelt, durch die Durchbrüche 62 nach außen gedrückt wird. Somit kann der Schnee nicht zwischen Verzahnung 54 und Band 13 kommen bzw. sich nicht fortlaufend anhäufen und dort zu einer Fehlfunktion der Antriebsvorrichtung 17 führen. Insbesondere kann dadurch ein sich allmählich aufbauender Umlenkungs- bzw. Abrollwiderstand des Bandes 13 vermieden bzw. hintan gehalten werden.

Wie in der Schnittansicht in Fig. 16 dargestellt, kann vorgesehen sein, dass die Öse 104 gleichzeitig als seitliche Führung für das Band 13 dient, indem ein gegenüber dem Band 13 bzw. gegenüber dessen Innenseite 53 vorstehender Teilbereich 105 der Öse 104 mit einer Ausnehmung 66, welche in den Gleitkörper 2 bzw. in dessen Unterseite 3 eingebracht ist, korrespondiert.

Alternativ oder zusätzlich dazu kann vorgesehen sein, dass die Öse 104 wenigstens einen Steg 106 aufweist, welcher mit einer in den Gleitkörper 2 eingebrachten Ausnehmung 66 korrespondiert, und somit als seitliche Führung gegenüber dem Gleitkörper 2 dient.

Das Sportgerät 1 eignet sich speziell für die Ausübung des Tourenskisports bzw. des Cross-Country-Skisports, wobei es dem Benutzer 8 vor allem die Zurücklegung von Wegstrecken bzw. Anstiegen erleichtern kann.

Die Ausführungsbeispiele zeigen mögliche Ausführungsvarianten des Sportgerätes 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1 bis 16 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Sportgerätes 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Sportgerät | 31 | dritte Umlenkvorrichtung |
| 2 | Gleitkörper | 32 | hinter der Bindungsvorrichtung |
| 3 | Unterseite | 33 | vierte Umlenkvorrichtung |
| 4 | Gleitfläche | 34 | Umlenkrolle |
| 5 | Oberseite | 35 | Gleitführung |
| 6 | Bindungsvorrichtung | 36 | Tragkonstruktion |
| 7 | Sportschuh | 37 | Steighilfemittel |
| 8 | Benutzer | 38 | Kupplungsvorrichtung Band |
| 9 | Länge des Gleitkörpers | 39 | Bandende |
| 10 | Breite des Gleitkörpers | 40 | Kupplungsvorrichtung |
| 11 | projizierte Fläche | 41 | Kupplungsvorrichtung |
| 12 | Untergrund | 42 | erstes Kupplungselement |
| 13 | Band | 43 | zweites Kupplungselement |
| 14 | erster Abschnitt | 44 | Koppelungsbewegung |
| 15 | zweiter Abschnitt | 45 | Längsmitte des Gleitkörpers |
| 16 | Längsrichtung des Gleitkörpers | 46 | Haltekralle |
| 17 | Antriebsvorrichtung | 47 | Anschlag |
| 18 | erste Umlenkvorrichtung | 48 | Betriebsstellung |
| 19 | Energieversorgungsquelle | 49 | Ruhestellung |
| 20 | erstes Längsende | 50 | Antriebsrolle |
| 21 | zweites Längsende | 51 | Elektromotor |
| 22 | Fortbewegungsrichtung | 52 | Verzahnung |
| 23 | hinterer Endabschnitt | 53 | Innenseite |
| 24 | vorderer Endabschnitt | 54 | korrespondierende Verzahnung |
| 25 | Freiraum | 55 | Bombierung |
| 26 | Schuhaufstandsebene | 56 | Radnabenmotor |
| 27 | Schuhaufnahmeelement | 57 | Achse |
| 28 | Verbindungsvorrichtung | 58 | Aufnahmegabel |
| 29 | Verbindungselement | 59 | Rotor |
| 30 | vor der Bindungsvorrichtung | 60 | Querstege |
| 61 | Außenseite | 93 | Rucksack |
| 62 | Durchbruch | 94 | Steuereinheit |
| 63 | Breite des Bandes | 95,95' | Eingabevorrichtung |
| 64 | Bandlängsrichtung | 96 | Drehwinkelstellung |
| 65 | Steg | 97, 97' | Erfassungsmittel |
| 66 | Ausnehmung | 98 | Schistock |
| 67 | Breite des Steges | 99 | Umlenkrolle |
| 68 | Teilabschnitt | 100 | Bindungsantrieb |
| 69 | Abschnitt | 101 | Freilauf |
| 70 | reibungsvermindernde Gleitoberfläche | 102 | weitere Antriebsrolle |
| | | 103 | Mittelabschnitt |
| 71, 71' | Untersetzungsgetriebe | 104 | Öse |
| 72 | Stirnende | 105 | Teilbereich der Öse |
| 73 | Drehlagerung | 106 | Steg |
| 74 | Lagerbock | | |
| 75 | Hohlzylinder | | |
| 76 | Befestigungselement | | |
| 77 | Innenwand | | |
| 78 | Zahnkranz | | |
| 79 | Achse Elektromotor | | |
| 80 | Achse Antriebsrolle | | |
| 81 | Achse Getriebe | | |
| 82 | Zahnrad | | |
| 83 | Ritzel | | |
| 84 | oberes Element | | |
| 85 | unteres Element | | |
| 86 | Drehgelenk | | |
| 87 | Schwenkachse | | |
| 88 | Schwenkbewegung | | |
| 89 | Befestigungsmittel | | |
| 90 | seitlicher Steg | | |
| 91 | seitliche Öffnung | | |
| 92 | Verschlusselement | | |

## Patentansprüche

1. Sportgerät (1) in Form einer Tourenskianordnung, umfassend einen Gleitkörper (2) an welchem eine Unterseite (3) als Gleitfläche (4) ausgebildet ist, eine an der Oberseite (5) des Gleitkörpers (2) angeordnete Bindungsvorrichtung (6) zur bedarfsweise lösbaren Befestigung eines Sportschuhs (7) eines Benutzers (8), zumindest ein umlaufendes Band (13), sowie eine Antriebsvorrichtung (17) und zumindest eine erste Umlenkvorrichtung (18) für das Band (13), **dadurch gekennzeichnet, dass** das Band (13) in einem ersten Abschnitt (14) der Unterseite (3) des Gleitkörpers (2) nächstliegend zugeordnet ist und das Band (13) in einem zweiten Abschnitt (15) der Oberseite (5) des Gleitkörpers (2) nächstliegend zugeordnet ist, und dass zumindest der überwiegende Teil der Länge (9) des Gleitkörpers (2) vom umlaufenden, in sich geschlossenen Band (13) umgrenzt ist und das Band (13) durch die Antriebsvorrichtung (17) zumindest in einer Längsrichtung (16) relativ zum Gleitkörper (2) bewegbar ist.

2. Sportgerät nach Anspruch 1, **dadurch gekennzeichnet, dass** die Antriebsvorrichtung (17) einem ersten Längsende (20) des Gleitkörpers (2) zugeordnet ist und die erste Umlenkvorrichtung (18) dem gegenüberliegenden, zweiten Längsende (21) des Gleitkörpers (2) zugeordnet ist, sodass der Gleitkörper (2) hinsichtlich seiner Länge (9) vom umlaufend geführten Band (13) vollständig umschlossen ist.

3. Sportgerät nach Anspruch 1 oder 2, **dadurch gekennzeichnet, dass** der zweite Abschnitt (15) in einem Freiraum (25) unterhalb einer Schuhaufstandsebene (26) der Bindungsvorrichtung (6) hindurchgeführt ist.

4. Sportgerät nach Anspruch 3, **dadurch gekennzeichnet, dass** der Freiraum (25) zwischen einer Verbindungsvorrichtung (28) zur gelenkigen Verbindung der Bindungsvorrichtung (6) mit dem Gleitkörper (2) und der Oberseite (5) des Gleitkörpers (2) oder zwischen Verbindungselementen (29) zur gelenkigen Verbindung des Sportschuhs (7) mit der Bindungsvorrichtung (6) und dem Gleitkörper (2) ausgebildet ist.

5. Sportgerät nach einem der vorhergehenden Ansprüche, **dadurch gekennzeichnet, dass** das Band (13) als endloses, rückgleithemmendes Steighilfemittel (37), insbesondere als Steigfell, ausgebildet ist, oder dass ein rückgleithemmendes Steighilfemittel (37) auf ein Band (13) aufgebracht ist.

6. Sportgerät nach Anspruch 5, **dadurch gekennzeichnet, dass** das Band (13) mittels einer bedarfsweise aktivier- und deaktivierbaren Kupplungsvorrichtung (38) ringförmig schließbar und auftrennbar ist.

7. Sportgerät nach Anspruch 5, **dadurch gekennzeichnet, dass** das ringförmige Band (13) untrennbar miteinander verbundene, insbesondere miteinander verschweißte, Bandenden (39) aufweist.

8. Sportgerät nach einem der vorhergehenden Ansprüche, **dadurch gekennzeichnet, dass** die Antriebsvorrichtung (17) an einem in Fortbewegungsrichtung (22) gesehen hinteren Endabschnitt (23) des Gleitkörpers (2) angeordnet ist und die erste Umlenkvorrichtung (18) am vorderen Endabschnitt (24) des Gleitkörpers (2) angeordnet ist.

9. Sportgerät nach einem der vorhergehenden Ansprüche, **dadurch gekennzeichnet, dass** die Antriebsvorrichtung (17) und/oder die erste Umlenkvorrichtung (18) mittels zumindest einer Kupplungsvorrichtung (40, 41) am Gleitkörper (2) bedarfsweise montier- und demontierbar gehaltert sind.

10. Sportgerät nach Anspruch 9, **dadurch gekennzeichnet, dass** die zumindest eine Kupplungsvorrichtung (40, 41) ein erstes Kupplungselement (42) und ein damit korrespondierendes zweites Kupplungselement (43) umfasst, wobei eine Koppelungsbewegung (44) zwischen dem ersten (42) und zweiten Kupplungselement (43) im Wesentlichen in Längsrichtung (16) des Gleitkörpers (2) verläuft und in Richtung zur Längsmitte (45) des Gleitkörpers (2) gerichtet ist.

11. Sportgerät nach einem der Ansprüche 1 bis 8, **dadurch gekennzeichnet, dass** die Antriebsvorrichtung (17) und/oder die erste Umlenkvorrichtung (18) zwischen einer das Band (13) aufspannenden Betriebsstellung (48) im Zuge eines Aufstiegszustandes des Sportgerätes und einer das Band (13) freigebenden Ruhestellung (49) im Zuge eines Abfahrtszustandes des Gleitkörpers (2) verstellbar, insbesondere verschwenkbar ist.

12. Sportgerät nach einem der vorhergehenden Ansprüche, **dadurch gekennzeichnet, dass** in Bezug auf die Längserstreckung (9) des Gleitkörpers (2) vor (30) und hinter (32) der Bindungsvorrichtung (6) zumindest eine dritte (31) und eine vierte Umlenkvorrichtung (33), insbesondere wenigstens eine Gleitführung (35) oder Umlenkrolle (34), angeordnet sind, durch welche der zweite Abschnitt (15) des Bandes (13) geführt und/oder umgelenkt ist.

13. Sportgerät nach einem der vorhergehenden Ansprüche, **dadurch gekennzeichnet, dass** das Band (13) an dessen Innenseite (53) zumindest abschnittsweise Querstege (60) oder sich zwischen dessen Innen- (53) und Außenseite (61) erstreckende Durchbrüche (62) zur Bildung einer Verzahnung (52) aufweist, welche Verzahnung (52) mit einer korrespondierenden Verzahnung (54) einer Antriebsrolle (50) der Antriebsvorrichtung (17) in kämmenden Eingriff steht.

14. Sportgerät nach einem der vorhergehenden Ansprüche, **dadurch gekennzeichnet, dass** das Band (13) an dessen Innenseite (53) wenigstens einen sich in Bandlängsrichtung (64) zumindest abschnittsweise erstreckenden Steg (65) aufweist, welcher in einer korrespondierenden Ausnehmung (66) in der Gleitfläche (4) des Gleitkörpers (2) verläuft.

15. Sportgerät nach Anspruch 14, **dadurch gekennzeichnet, dass** der wenigstens eine Steg (65) eine Vielzahl von zueinander beabstandeten Querstege (60) umfasst, welche eine Verzahnung (52) zur kämmenden Verbindung mit einer Antriebsrolle (50) der Antriebsvorrichtung (17) ausbilden.

16. Sportgerät nach Anspruch 14 oder 15, **dadurch gekennzeichnet, dass** sich eine Breite (67) des Steges (65) nur über einen Teilabschnitt (68) der Breite (63) des Bandes (13) erstreckt und in Bezug auf die Breite (63) des Bandes (13) gesehen zumindest die äußeren Abschnitte (69) an der Innenseite (53) des Bandes (13) reibungsvermindernde Gleitoberflächen (70) gegenüber der Gleitfläche (4) des Gleitkörpers (2) aufweisen.

17. Sportgerät nach einem der der vorhergehenden Ansprüche, **dadurch gekennzeichnet, dass** die Antriebsvorrichtung (17) einen Elektromotor (51) und gegebenenfalls ein Untersetzungsgetriebe (71) umfasst.

18. Sportgerät nach einem der vorhergehenden Ansprüche, **dadurch gekennzeichnet, dass** die Antriebsvorrichtung (17) achsenlos ausgeführt ist, indem eine Antriebsrolle (50) der Antriebsvorrichtung (17) an wenigstens einem axialen Stirnende (72) eine Drehlagerung (73) aufweist, durch welche die Antriebsrolle (50) mit einem am Gleitkörper (2) festgelegten Lagerbock (74) drehbeweglich verbunden ist.

19. Sportgerät nach Anspruch 18, **dadurch gekennzeichnet, dass** die Antriebsrolle (50) als dünnwandiger Hohlzylinder (75) ausgebildet ist und einen Elektromotor (51) sowie ein gegebenenfalls vorgesehenes Untersetzungsgetriebe (71) innerhalb der hohlzylindrischen Antriebsrolle (50) angeordnet sind.

20. Sportgerät nach Anspruch 19, **dadurch gekennzeichnet, dass** die Antriebsrolle (50) an dessen hohlzylindrischer Innenwand (77) einen Zahnkranz (78) aufweist, durch welchen die Antriebsrolle (50) mittels des Elektromotors (51) oder des zwischengeschalteten Untersetzungsgetriebes (71) antreibbar ist.

21. Sportgerät nach einem der vorhergehenden Ansprüche, **dadurch gekennzeichnet, dass** die Antriebsvorrichtung (17) einen Radnabenmotor (56) umfasst, dessen Rotor (59) die Antriebsrolle (50) definiert oder aufnimmt.

22. Sportgerät nach einem der vorhergehenden Ansprüche, **dadurch gekennzeichnet, dass** eine Energieversorgungsquelle (19) in Form eines elektrochemischen Akkupacks, insbesondere eines Bleigel-, Nickel-Cadmium- (NiCd), Nickel-Metallhydrid- (NiMH) oder Lithium-Ionen- (Li-Ion) Akkus vorgesehen ist, durch welche die Antriebsvorrichtung (17) mit elektrischer Energie versorgbar ist.

23. Sportgerät nach einem der vorhergehenden Ansprüche, **dadurch gekennzeichnet, dass** eine elektrotechnische Steuereinheit (94) mit der Antriebsvorrichtung (17) verbunden und zur Steuerung der Antriebsvorrichtung (17) ausgebildet ist, welche Steuereinheit (94) wenigstens eine digitale Eingabevorrichtung (95, 95') oder ein Potentiometer umfasst, durch welche eine Drehzahl und damit einhergehend eine Bewegungsgeschwindigkeit und/oder eine Einschaltdauer bzw. Schaltzeitpunkte der Antriebsvorrichtung (17) vorgebbar oder variabel einstellbar ist.

24. Sportgerät nach Anspruch 23, **dadurch gekennzeichnet, dass** die Steuereinheit (94) mit wenigstens einem Erfassungsmittel (97), beispielsweise einem Schaltkontakt oder einem elektrotechnischen Sensor, zur Erfassung eines Aktivierungsbefehls für die Antriebsvorrichtung (17) verbunden ist.

25. Sportgerät nach Anspruch 24, **dadurch gekennzeichnet, dass** das wenigstens eine Erfassungsmittel (97) zur Erfassung eines von einem Benutzer (8) aktiv oder bewusst initiierten Steuerbefehls und/oder zur Erfassung eines durch den physiologischen Bewegungsablauf bedingten Bewegungszustandes, beispielsweise einer vorbestimmten Drehwinkelstellung (96) der Bindungsvorrichtung (6) relativ zum Gleitkörper (2) oder einer Druckbelastung gegenüber dem Gleitkörper (2), ausgebildet ist, und dass die Antriebsvorrichtung (17) in Abhängigkeit von den Erfassungszuständen des wenigstens einen Erfassungsmittels (97) angesteuert ist.

26. Sportgerät nach Anspruch 25, **dadurch gekennzeichnet, dass** das Erfassungsmittel (97) als Beschleunigungssensor ausgebildet ist, wobei eine Bewegung des Benutzers (8) durch den Beschleunigungssensor erfasst wird und die Antriebsvorrichtung (17) auf Basis der Erfassungszustände angesteuert wird.

27. Sportgerät nach einem der vorhergehenden Ansprüche, **dadurch gekennzeichnet, dass** die Bindungsvorrichtung (6) einen Bindungsantrieb (100) umfasst, durch welchen die Bindungsvorrichtung (6) aktiv in eine gegenüber dem Gleitkörper (2) hochgeschwenkte Drehwinkelstellung (96) verschwenkbar ist.

## Claims

1. Sporting device (1) in the form of a touring ski assembly, comprising a sliding body (2) on which a bottom side (3) is designed as a sliding surface (4), a binding apparatus (6) disposed on the top face (5) of the sliding body (2) for fastening to a sporting shoe (7) of a user (8) in such a way that the fastening can be released when necessary, at least one circulating belt (13) as well as a drive apparatus (17) and at least one first deflecting apparatus (18) for the belt (13), **characterized in that**, the belt (13) is disposed next to the bottom side (3) of the sliding body (2) in a first segment (14) and the belt (13) is disposed next to the top face (5) of the sliding body (2) in a second segment (15), and at least the majority of the length (9) of the sliding body (2) is surrounded by the circulating, intrinsically closed belt (13) and the belt (13) can be moved by the drive apparatus (17) at least in a longitudinal direction (16) relative to the sliding body (2).

2. Sporting device according to claim 1, **characterized in that**, the drive apparatus (17) is disposed at a first longitudinal end (20) of the sliding body (2) and the first deflecting apparatus (18) is disposed at the opposite, second longitudinal end (21) of the sliding body (2) so that the sliding body (2) is completely surrounded by the circulating belt (13) in terms of its length (9).

3. Sporting device according to claim 1 or 2, **characterized in that**, the second segment (15) is inserted through a gap (25) underneath a shoe support plane (26) of the binding apparatus (6).

4. Sporting device according to claim 3, **characterized in that**, the gap (25) is disposed between a connecting device (28) for establishing an articulated connection of the binding apparatus (6) to the sliding body (2) and top face (5) of the sliding body (2) or between connecting elements (29) for establishing an articulated connection of the sporting shoe (7) to the binding apparatus (6) and sliding body (2).

5. Sporting device according to one of the preceding claims, **characterized in that**, the belt (13) is provided as an endless climbing aid (37) which prevents backsliding, or a climbing aid (37) applied to a belt (13) which prevents backsliding.

6. Sporting device according to claim 5, **characterized in that**, the belt (13) can be closed in an annular shape and opened as and when necessary by means of an activatable and deactivatable coupling device (38).

7. Sporting device according to claim 5, **characterized in that**, the annular belt (13) is inseparably joined in form of belt ends (39) that are welded to one another.

8. Sporting device according to one of the preceding claims, **characterized in that**, the drive apparatus (17) is disposed on a rear end section (23) of the sliding body (2) as viewed in the direction of forward movement (22) and the first deflecting apparatus (18) is disposed on the front end section (24) of the sliding body (2).

9. Sporting device according to one of the preceding claims, **characterized in that**, the drive apparatus (17) and/or the first deflecting apparatus (18) are retained in such a way that they can be mounted on and removed from the sliding body (2) by means of at least one coupling device (40, 41) as and when necessary.

10. Sporting device according to claim 9, **characterized in that**, the at least one coupling device (40, 41) comprises a first coupling element (42) and a second coupling element (43) co-operating therewith and a coupling movement (44) between the first (42) and second coupling element (43) extends substantially in the longitudinal direction (16) of the sliding body (2) and is oriented in the direction towards the longitudinal center (45) of the sliding body (2).

11. Sporting device according to one of claims 1 to 8, **characterized in that**, the drive apparatus (17) and/or the first deflecting apparatus (18) can be moved, in particular pivoted, between an operating position (48) tensioning the belt (13) when the sporting device is in climbing mode and a non-operating position (49) releasing the belt (13) when the sliding body (2) is in travel mode.

12. Sporting device according to one of the preceding claims, **characterized in that**, by reference to the longitudinal extension (9) of the sliding body (2), at least a third (31) and a fourth deflecting apparatus (33), in particular at least one slide guide (35) or deflection roller (34), are provided in front of (30) and behind (32) the binding apparatus (6), by means of which the second segment (15) of the belt (13) is guided and/or deflected.

13. Sporting device according to one of the preceding claims, **characterized in that**, the belt (13) is provided with transverse webs (60) at least in certain regions of its internal face (53) or orifices (62) extending between its internal (53) and external face (61) to form toothing (52), which toothing (52) meshes with co-operating toothing (54) of a drive roller (50) of the drive apparatus (17).

14. Sporting device according to one of the preceding claims, **characterized in that**, the belt (13) has at least one web (65) in at least a certain region of its internal face (53) extending in the belt longitudinal direction (64), which runs in a co-operating recess (66) in the sliding surface (4) of the sliding body (2).

15. Sporting device according to claim 14, **characterized in that**, the at least one web (65) comprises a plurality of mutually spaced transverse webs (60) which form toothing (52) to establish a meshing connection with a drive roller (50) of the drive apparatus (17).

16. Sporting device according to claim 14 or 15, **characterized in that**, a width (67) of the web (65) extends across only a part-section (68) of the width (63) of the belt (13) and, by reference to the width (63) of the belt (13), at least the outer segments (69) are provided with sliding surfaces (70) on the internal face (53) of the belt (13) which reduce friction with the sliding surface (4) of the sliding body (2).

17. Sporting device according to one of the preceding claims, **characterized in that**, the drive apparatus (17) comprises an electric motor (51) and optionally a reducing gear (71).

18. Sporting device according to one of the preceding claims, **characterized in that**, the drive apparatus (17) is based on a design without a shaft because a drive roller (50) of the drive apparatus (17) has a rotary bearing (73) on at least one axial end face (72) by means of which the drive roller (50) is rotatably connected to a bearing block (74) secured to the sliding body (2).

19. Sporting device according to claim 18, **characterized in that**, the drive roller (50) is provided in the form of a thin-walled hollow cylinder (75) and an electric motor (51) and an optionally provided reducing gear (71) are disposed inside the hollow cylindrical drive roller (50).

20. Sporting device according to claim 19, **characterized in that**, the drive roller (50) has a toothed rim (78) on its hollow cylindrical internal wall (77) by means of which the drive roller (50) can be driven by means of the electric motor (51) or the interconnected reducing gear (71).

21. Sporting device according to one of the preceding claims, **characterized in that**, the drive apparatus (17) comprises a wheel hub motor (56), the rotor (59) of which defines or accommodates the drive roller (50).

22. Sporting device according to one of the preceding claims, **characterized in that**, a power supply source (19) is provided in the form of an electrochemical rechargeable battery, in particular a lead gel, nickel-cadmium (NiCd), nickel-metal hydride (NiMH) or lithium ion (Li-Ion) rechargeable battery, by means of which the drive apparatus (17) can be supplied with electrical energy.

23. Sporting device according to one of the preceding claims, **characterized in that**, an electrical control unit (94) is connected to the drive apparatus (17) and configured to control the drive apparatus (17), which control unit (94) comprises at least one digital input device (95, 95') or a potentiometer, by means of which a rotation speed and hence the associated speed of movement and/or a cycle time and/or switching times of the drive apparatus (17) can be predefined or are variably adjustable.

24. Sporting device according to claim 23, **characterized in that**, the control unit (94) is connected to at least one detection means (97), for example a switch contact or an electrical sensor, in order to detect an activation command for the drive apparatus (17).

25. Sporting device according to claim 24, **characterized in that**, the at least one detection means (97) is configured to detect a control command actively or consciously initiated by a user (8) and/or to detect a state of motion induced by the physiological motion sequence, for example a predefined position of angular rotation (96) of the binding apparatus (6) relative to the sliding body (2) or a pressure load relative to the sliding body (2), and the drive apparatus (17) is activated as a function of the states detected by the at least one detection means (97).

26. Sporting device according to claim 25, **characterized in that**, the detection means (97) is provided in the form of an acceleration sensor, in which case a movement of the user (8) is detected by the acceleration sensor and the drive apparatus (17) is activated on the basis of the detected states.

27. Sporting device according to one of the preceding claims, **characterized in that**, the binding apparatus (6) comprises a binding drive (100) by means of which the binding apparatus (6) can be actively pivoted into an upwardly pivoted position of angular rotation (96) relative to the sliding body (2).

## Revendications

1. Appareil de sport (1) sous la forme d'un dispositif de ski de randonnée comprenant un corps de glissement (2) sur lequel est réalisé un côté inférieur (3) sous la forme d'une surface de glissement (4), un dispositif de fixation (6) disposé sur le côté supérieur (5) du corps de glissement (2), pour la fixation amovible, si nécessaire, d'une chaussure de sport (7) d'un utilisateur (8), au moins une bande circulante (13) ainsi qu'un dispositif d'entraînement (17) et au moins un premier dispositif de renvoi (18) pour la bande (13), **caractérisé en ce que** la bande (13) correspond, dans une première portion (14), au côté inférieur (3) du corps de glissement (2) le plus proche et la bande (13) correspondant, dans une deuxième portion (15), au côté supérieur (5) du corps de glissement (2) le plus proche et **en ce qu'**au moins la majeure partie de la longueur (9) du corps de glissement (2) est entourée par la bande (13) circulante refermée sur elle-même et la bande (13) peut être déplacée par le dispositif d'entraînement (17) au moins dans une direction longitudinale (16) par rapport au corps de glissement (2).

2. Appareil de sport selon la revendication 1, **caractérisé en ce que** le dispositif d'entraînement (17) correspond à une première extrémité longitudinale (20) du corps de glissement (2) et le premier dispositif de renvoi (18) correspond à la deuxième extrémité longitudinale (21) opposée du corps de glissement (2), de façon à ce que le corps de glissement (2) soit complètement entouré sur sa longueur (9) par la bande (13) guidée circulante.

3. Appareil de sport selon la revendication 1 ou 2, **caractérisé en ce que** la deuxième portion (15) est guidé dans un espace libre (25) en dessous d'un plan de pose de chaussure (26) du dispositif de fixation (6).

4. Appareil de sport selon la revendication 3, **caractérisé en ce que** l'espace libre (25) est formé entre un dispositif de liaison (28) pour la liaison articulée du dispositif de fixation (6) avec le corps de glissement (2) et le côté supérieur (5) du corps de glissement (2) ou entre des éléments de liaison (29) pour la liaison articulée de la chaussure de sport (7) avec le dispositif de fixation (6) et le corps de glissement (2).

5. Appareil de sport selon l'une des revendications précédentes, **caractérisé en ce que** la bande (13) est conçue sous la forme d'un moyen d'aide à la montée (37) sans fin antidérapant, plus particulièrement sous la forme d'une peau de phoque ou **en ce que** un moyen d'aide à la montée (37) antidérapant est monté sur une bande (13).

6. Appareil de sport selon la revendication 5, **caractérisé en ce que** la bande (13) peut être fermée de manière annulaire et séparé au moyen d'un dispositif de couplage (38) pouvant être activé et désactivé si nécessaire.

7. Appareil de sport selon la revendication 5, **caractérisé en ce que** la bande annulaire (13) comprend des extrémités de bande (39) reliées entre elles de manière inséparable, plus particulièrement soudées entre elles.

8. Appareil de sport selon l'une des revendications précédentes, **caractérisé en ce que** le dispositif d'entraînement (17) est disposé sur une portion d'extrémité arrière (23), vue dans la direction de déplacement vers l'avant (22), du corps de glissement (2) et le premier dispositif de renvoi (18) est disposé au niveau de la portion d'extrémité avant (24) du corps de glissement (2).

9. Appareil de sport selon l'une des revendications précédentes, **caractérisé en ce que** le dispositif d'entraînement (17) et/ou le premier dispositif de renvoi (18) sont maintenus de manière montable et démontable si nécessaire au moyen d'au moins un dispositif de couplage (40, 41) sur le corps de glissement (2).

10. Appareil de sport selon la revendication 9, **caractérisé en ce que** l'au moins un dispositif de couplage (40, 41) comprend un premier élément de couplage (42) et un deuxième élément de couplage (43) correspondant, un mouvement de couplage (44) entre le premier (42) et le deuxième élément de couplage (43) s'étendant globalement dans la direction longitudinale (16) du corps de glissement (2) et étant orientée en direction du centre longitudinal (45) du corps de glissement (2).

11. Appareil de sport selon l'une des revendications 1 à 8, **caractérisé en ce que** le dispositif d'entraînement (17) et/ou le premier dispositif de renvoi (18) peut être réglé, plus particulièrement pivoté entre une position de fonctionnement (48) précontraignant la bande (13) lors d'un état de montée de l'appareil de sport et une position de repos (49) libérant la bande (13) lors d'un état de descente du corps de glissement (2).

12. Appareil de sport selon l'une des revendications précédentes, **caractérisé en ce que**, en ce qui concerne l'extension longitudinale (9) du corps de glissement (2) devant (30) et derrière (32) le dispositif de fixation (6), au moins un troisième (31) et un quatrième dispositif de renvoi (33), plus particulièrement au moins un guidage de glissement (35) ou un rouleau de renvoi (34), sont disposés, à l'aide desquels la deuxième portion (15) de la bande (13) est guidée et/ou renvoyée.

13. Appareil de sport selon l'une des revendications précédentes, **caractérisé en ce que** la bande (13) comprend, sur son côté intérieur (53), au moins à certains endroits, des nervures transversales (60) ou des passages (62) s'étendant entre son côté intérieur (53) et son côté extérieur (61) pour la formation d'une denture (52), cette denture (52) étant engrenée avec une denture (54) correspondante d'un rouleau d'entraînement (50) du dispositif d'entraînement (17).

14. Appareil de sport selon l'une des revendications précédentes, **caractérisé en ce que** la bande (13) comprend, sur son côté intérieur (53), au moins une nervure (65) s'étendant au moins à certains endroits dans la direction longitudinale de la bande (64), qui s'étend dans un évidement (66) correspondant dans la surface de glissement (4) du corps de glissement (2).

15. Appareil de sport selon la revendication 14, **caractérisé en ce que** l'au moins une nervure (65) comprend une pluralité de nervures transversales (60) écartées entre elles, qui forment une denture (52) pour l'engrènement avec un rouleau d'entraînement (50) du dispositif d'entraînement (17).

16. Appareil de sport selon la revendication 14 ou 15, **caractérisé en ce qu'**une largeur (67) de la nervure (65) s'étendant seulement sur une partie (68) de la largeur (63) de la bande (13) et, vus par rapport à la largeur (63) de la bande (13), au moins les portions extérieures (69) sur le côté intérieur (53) de la bande (13) comprennent des surfaces de glissement (70) réduisant les frictions en face de la surface de glissement (4) du corps de glissement (2).

17. Appareil de sport selon l'une des revendications précédentes, **caractérisé en ce que** le dispositif d'entraînement (17) comprend un moteur électrique (51) et, le cas échéant, une transmission de démultiplication (71).

18. Appareil de sport selon l'une des revendications précédentes, **caractérisé en ce que** le dispositif d'entraînement (17) est réalisé sans axe, grâce au fait qu'un rouleau d'entraînement (50) du dispositif d'entraînement (17) comprend, au niveau d'au moins une extrémité frontale axiale (72), un palier rotatif (73) à l'aide duquel le rouleau d'entraînement (50) est relié en rotation avec un support de palier (74) fixé au corps de glissement (2).

19. Appareil de sport selon la revendication 18, **caractérisé en ce que** le rouleau d'entraînement (50) est conçu comme un cylindre creux (75) à parois minces et un moteur électrique (51) ainsi qu'une transmission de démultiplication (71), prévue le cas échéant, sont disposés à l'intérieur du rouleau d'entraînement (50) cylindrique creux.

20. Appareil de sport selon la revendication 19, **caractérisé en ce que** le rouleau d'entraînement (50) comprend, au niveau de sa paroi intérieure (77) cylindrique creuse, une couronne dentée (78) à l'aide de laquelle le rouleau d'entraînement (50) peut être entraîné au moyen du moteur électrique (51) ou de la transmission de démultiplication (71) branchée entre eux.

21. Appareil de sport selon l'une des revendications précédentes, **caractérisé en ce que** le dispositif d'entraînement (17) comprend un moteur à moyeu de roue (56) dont le rotor (59) définit ou loge le rouleau d'entraînement (50).

22. Appareil de sport selon l'une des revendications précédentes, **caractérisé en ce qu'**une source d'alimentation en énergie (19) est prévue sous la forme d'un pack d'accumulateurs électrochimiques, plus d'un accumulateur à gel de plomb, nickel-cadmium (NiCd), nickel-hybride métallique (NiMH) ou lithium-ions (Li-Ion), à l'aide duquel le dispositif d'entraînement (17) peut être alimenté en énergie électrique.

23. Appareil de sport selon l'une des revendications précédentes, **caractérisé en ce qu'**une unité de commande électrotechnique (94) est reliée avec le dispositif d'entraînement (17) et est conçue pour le contrôle du dispositif d'entraînement (17), cette unité de commande (94) comprenant au moins un dispositif d'entrée digital (95, 95') ou un potentiomètre, à l'aide duquel une vitesse de rotation et dont une vitesse de déplacement et/ou une durée de mise en marche ou des moments de commutation du dispositif d'entraînement (17) peuvent être prédéterminés ou réglés de manière variable.

24. Appareil de sport selon la revendication 23, **caractérisé en ce que** l'unité de commande (94) est reliée avec au moins un moyen de détection (97), par exemple un contact de commutation ou un capteur électrotechnique, pour la détection d'une instruction d'activation pour le dispositif d'entraînement (17).

25. Appareil de sport selon la revendication 24, **caractérisé en ce que** l'au moins un moyen de détection (97) est conçu pour la détection d'une instruction de commande initiée, de manière active ou consciente, par un utilisateur (8) et/ou pour la détection d'un état de déplacement conditionné par le déroulement physiologique du mouvement, par exemple d'une position angulaire de rotation (96) prédéterminée du dispositif de fixation (6) par rapport au corps de glissement (2) ou d'une sollicitation en pression par rapport au corps de glissement (2) et **en ce que** le dispositif d'entraînement (17) est commandé en fonction des états de détection de l'au moins un moyen de détection (97).

26. Appareil de sport selon la revendication 25, **caractérisé en ce que** le moyen de détection (97) est conçu comme un capteur d'accélération, un mouvement de l'utilisateur (8) étant détecté par le capteur d'accélération et le dispositif d'entraînement (17) étant commandé sur la base des états de détection.

27. Appareil de sport selon l'une des revendications précédentes, **caractérisé en ce que** le dispositif de fixation (6) comprend un entraînement de fixation (100) à l'aide duquel le dispositif de fixation (6) peut être pivoté activement dans une position angulaire de rotation (96) pivotée vers le haut par rapport au corps de glissement (2).
